# EUROPÄISCHE PATENTANMELDUNG

(11) **EP 1 843 062 A2**
(43) Veröffentlichungstag der Anmeldung: **10.10.2007**
(21) Anmeldenummer: 07006109.8
(22) Anmeldetag: 24.03.2007
(51) Int. Cl.: F16H 45/02

(54) **Fluidbefüllte Kopplungsanordnung**

(30) Priorität: 07.04.2006 DE 102006016417; 07.02.2007 DE 102007005999
(71) Anmelder: ZF FRIEDRICHSHAFEN AG, 88046 Friedrichshafen (DE)
(72) Erfinder: Heuler, Michael, 97080 Würzburg (DE); Dacho, Jürgen, 97688 Bad Kissingen (DE)

(57) **Zusammenfassung**

Eine fluidbefüllte Kopplungsanordnung (3) ist mit einer über ein Gehäuse (5) verfügenden Kupplungseinrichtung (66) ausgebildet. Diese weist einen Kolben (62) und einen Reibbereich (140) auf, wobei durch die Kupplungseinrichtung (66) in Abhängigkeit von der Position des im Gehäuse (5) zumindest im wesentlichen abgedichtet und axial verlagerbar angeordneten Kolbens (62) in Bezug zu dem in einem Kühlraum (220) vorgesehenen Reibbereich (140) eine Wirkverbindung zwischen einem Antrieb (11) und einem Abtrieb (18) zumindest teilweise herstellbar oder aufhebbar ist. Durch den Kolben (62) ist ein zwischen dessen Antriebsseite (107) und einer benachbarten Gehäusewandung vorgesehener antriebsseitiger Druckraum (105) von einem an der Abtriebsseite (114) des Kolbens vorgesehenen abtriebsseitigen Druckraum (112) zumindest im wesentlichen getrennt. Zumindest einem dieser Druckräume (105,112) sowie dem Kühlraum (220) ist wenigstens eine Versorgungsleitung (75,76) zugeordnet, die an wenigstens einer Versorgungsquelle (80) angeschlossen ist. Der abtriebsseitige Druckraum (112) ist einerseits durch die Abtriebsseite (114) des Kolbens (62) und andererseits durch eine dem Kolben (62) zugeordnete Trennwandung (110) begrenzt.

## Beschreibung

Die Erfindung betrifft eine fluidbefüllte Kopplungsanordnung gemäß dem Oberbegriff des Anspruches 1.

Durch die DE 103 47 782 A1 ist eine fluidbefüllte Kopplungsanordnung in Form eines hydrodynamischen Drehmomentwandlers bekannt, welche in einem Gehäuse eine Kupplungseinrichtung, realisiert als Überbrückungskupplung für einen hydrodynamischen Kreis, aufweist. Diese Kupplungseinrichtung ist mit einem Kolben versehen, der in Abhängigkeit von seiner axialen Position im Gehäuse entweder eine Anpresskraft auf ein Kupplungselement einer axial benachbarten, über einen Reibbereich verfügenden Kupplung ausübt, und damit die Kupplung zur Übertragung eines Drehmomentes ganz oder zumindest teilweise befähigt, oder aber die Ausübung der Anpresskraft auf das Kupplungselement zur Aufhebung der Übertragung des Drehmomentes beendet. Da ein antriebsseitiger Kupplungs-Elemententräger der Kupplung über das Gehäuse mit einem nicht gezeigten Antrieb und ein abtriebsseitiger Kupplungs-Elemententräger der Kupplung über einen Torsionsschwingungsdämpfer mit einem Abtrieb in Form einer Getriebeeingangswelle verbunden ist, dient die Kupplungseinrichtung zu einer An- oder Abkoppelung des Abtriebs gegenüber dem Antrieb.

Der Kolben ist sowohl an seinem radial äußeren Ende als auch an seinem radial inneren Ende gegenüber dem jeweils benachbarten Bauteil abgedichtet, und trennt somit einen zwischen einer Antriebsseite des Kolbens und einer benachbarten Gehäusewandung vorgesehenen antriebsseitigen Druckraum von einem an einer Abtriebsseite des Kolbens vorgesehenen abtriebsseitigen Druckraum, in welchem die Kupplung aufgenommen ist, und der somit auch als Kühlraum für die Kupplung dient, außerdem aber in unmittelbarer Strömungsverbindung mit dem hydrodynamischen Kreis steht. Der antriebsseitige Druckraum ist über eine erste Versorgungsleitung an eine Versorgungsquelle angeschlossen ist, der abtriebsseitige Druckraum über eine zweite Versorgungsleitung und der hydrodynamische Kreis über eine dritte Versorgungsleitung. In Fachkreisen wird eine derartige fluidbefüllte Kopplungsanordnung als Drei-Leitungs-System bezeichnet.

Bei der bekannten fluidbefüllten Kopplungsanordnung wird versucht, durch antriebsseitige Kapselung des Torsionsschwingungsdämpfers die zwingend benötigte Durchströmung der kühlungsbedürftigen Kupplung bei einem Fluidaustausch zwischen hydrodynamischem Kreis und abtriebsseitigem Druckraum zu verbessern. Allerdings verbleiben hierbei eine Mehrzahl von als berührungsfreie Dichtstellen wirksame Spalten, die aus Toleranzgründen ein bestimmtes Mindestspaltmaß nicht unterschreiten dürfen, und dadurch dem fluidförmigen Medium immer noch hinreichend Möglichkeiten für eine unerwünschte Leckageströmung eröffnen. Würden statt der vorgenannten Spalte Berührungsdichtungen verwendet, so wären diese zum einen gerade an Stellen relativer Bewegung reibungsbedingt einem erhöhten Verschleiß unterworfen, der wiederum eine Vergrößerung der Leckageströmung zur Folge hätte, und zum anderen könnte die Entkopplungsgüte des Torsionsschwingungsdämpfers, ebenfalls reibungsbedingt, nachhaltig beeinträchtigt sein. Zudem ist nicht auszuschließen, dass durch unerwünschte Leckageströme gerade im abtriebsseitigen Druckraum die Betätigungsgeschwindigkeit des Kolbens ebenso beeinträchtigt ist wie dessen Regelungsqualität.

Die zuvor geschilderten Nachteile gelten in analoger Weise auch bei fluidbefüllten Kopplungsanordnungen in Form nasslaufender Kupplungssysteme, die ohne einen zur Momentenübertragung befähigten hydrodynamischen Kreis auskommen müssen, bei denen aber gleichwohl die Kupplungselemente der Kupplung in einem Kühlraum angeordnet sind, der durch den Kolben, von einem antriebsseitigen Druckraum getrennt ist. Auch hier ist der Druckraum an eine erste Versorgungsleitung angeschlossen, und der Kühlraum an zumindest eine weitere Versorgungsleitung. Beispielhaft für derartige Kopplungsanordnungen sei auf die DE 102 34 822 A1 verwiesen.

Der Erfindung liegt die Aufgabe zugrunde, eine fluidbefüllte Kopplungsanordnung mit einer einen Kolben aufweisenden Kupplungseinrichtung derart auszubilden, dass kühlungsverschlechternde Leckageströme fluidförmigen Mediums ebenso wie unerwünschte, entkopplungsverschlechternde Reibeinflüsse wirksam vermieden sind.

Diese Aufgabe wird durch die Merkmale des Anspruchs 1 gelöst. Erfindungsgemäß ist einem Kolben einer Kupplungseinrichtung einer fluidbefüllten Kopplungsanordnung abtriebsseitig eine Trennwandung zugeordnet, so dass ein abtriebsseitiger Druckraum zumindest im wesentlichen einerseits durch eine Abtriebsseite des Kolbens und andererseits durch die Trennwandung begrenzt ist, die ihrerseits zwischen der Abtriebsseite des abtriebsseitigen Druckraumes und einem Kühlraum wirksam ist, wobei der letztgenannte bei Ausbildung der fluidbefüllten Kopplungsvorrichtung als hydrodynamischer Drehmomentwandler im Sinne eines hydrodynamischen Kreises wirksam ist. Dadurch bedingt, ergibt sich im radialen Erstreckungsbereich des abtriebsseitigen Druckraumes eine Strömungsführung, die frei von leckagebedingenden Unterbrechungen, wie Spalten, ist, und daher die Ausbildung einer zumindest im wesentlichen ungeminderten Fluidströmung bewirkt zwischen einer dem abtriebsseitigen Druckraum zugeordneten Versorgungsleitung, die an einer Versorgungsquelle angeschlossen ist, und einer mit dem Kolben zusammenwirkenden, einen Reibbereich aufweisenden Kupplung der Kupplungseinrichtung, und zwar sowohl bei Strömungsrichtung der Fluidströmung von der Versorgungsleitung zum Reibbereich, als auch in entgegengesetzter Strömungsrichtung. Bei einer fluidbefüllten Kopplungsanordnung in Form eines Drei-Leitungs-Systems ist hierbei der abtriebsseitige Druckraum unmittelbar mit der diesem Druckraum zugeordneten Versorgungsleitung verbunden, während bei einer fluidbefüllten Kopplungsanordnung in Form eines Zwei-Leitungs-Systems der abtriebsseitige Druckraum über zumindest eine Verbindung zu einem antriebsseitigen Druckraum mit einer dem letztgenannten Druckraum zugeordneten Versorgungsleitung verbunden werden kann. Zur besseren Unterscheidbarkeit der beiden Versorgungsleitungen soll die dem antriebsseitigen Druckraum zugeordnete als erste Versorgungsleitung und die dem abtriebsseitigen Druckraum zugeordnete Versorgungsleitung als zweite Versorgungsleitung bezeichnet werden.

Bedingt durch die vorgenannte Ausgestaltung des abtriebsseitigen Druckraums kann fluidförmiges Medium, das diesen Druckraum durchströmt, nur über einen Strömungsdurchlass, der den abtriebsseitigen Druckraum mit dem Kühlraum verbindet, den Druckraum an dessen von der jeweiligen Versorgungsleitung abgewandten Seite wieder verlassen, wodurch sich eine Zwangsströmung über eine Kupplung der Kupplungseinrichtung und damit über deren Reibbereich ergibt. Dieser Vorteil tritt sowohl bei einem Drei-Leitungs-Wandler als auch bei einem Zwei-Leitungs-Wandler auf, wobei sich bei dem letztgenannten aufgrund der dem Kolben zugeordneten Trennwandung zudem der Vorteil einer besseren Schubeinregelfähigkeit, also des geregelten Schließens des Kolbens bei Schubbetrieb zur Nutzung der Motorbremse, einstellt.

Aufgrund der Trennwandung ist die abtriebsseitige Druckkammer nicht nur mit Ausnahme der Versorgungsleitung sowie des Strömungsdurchlasses geschlossen, sondern darüber hinaus auch kompakt, was eine rasche Befüllbarkeit dieser Druckkammer mit Fluid für einen schnellen Druckaufbau an der Abtriebsseite des Kolbens ebenso wie eine gezielte Befüllbarkeit der Druckkammer für eine feinfühlige Regelung einer Bewegung des Kolbens begünstigt.

Die Trennwandung selbst kann in Bezug zum Kolben axial relativ bewegbar sein, wodurch sich der Vorteil ergibt, dass die Trennwandung ungeachtet des jeweiligen Betriebszustandes der Kupplungseinrichtung, also sowohl offen als auch geschlossen oder zumindest teilweise geschlossen, bei entsprechender Festlegung der Durchflussrichtung in der fluidbefüllten Kopplungsanordnung, jeweils am benachbarten Kupplungselement pressend in Anlage verbleibt. Auf diese Weise wird das Entstehen einer Restleckage vermieden, die sich bei einem Ablösen der Trennwandung vom benachbarten Kupplungselement ergeben könnte.

Ebenso kann aber auch eine Festverbindung der Trennwandung mit dem Kolben vorteilhaft sein. Zwar folgt hierdurch die Trennwandung der Bewegung des Kolbens beim Öffnen der Kupplungseinrichtung nach, und wird sich hierbei vom benachbarten Kupplungselement lösen, jedoch wirkt sich dieser Spalt mit der dadurch entstehenden Restleckage nicht negativ aus, da bei geöffneter Kupplungseinrichtung üblicherweise keine Reibungswärme entsteht. Gleichzeitig bewirkt die Trennwandung, die, wie nachfolgend ausführlich ausgeführt wird, mittels einer Drehsicherung in das Gehäuse der fluidbefüllten Kopplungsanordnung eingesetzt werden kann, durch ihre Festverbindung mit dem Kolben eine drehfeste Aufnahme auch desselben, so dass der Kolben gegen eine ungewollte Relativdrehung gegenüber dem Gehäuse und damit gegenüber eventuellen Kolbendichtungen gesichert ist, was eine Reduzierung des Dichtungsverschleißes begünstigt. Die Festverbindung ist mit Vorzug durch Verschweißung oder Vernietung hergestellt, und mit besonderem Vorzug im Erstreckungsbereich von Distanzhaltern vorgesehen, welche am Kolben und/oder der Trennwandung, jeweils in Richtung des jeweils anderen Bauteils weisend, vorgesehen sind und zur Schaffung von Strömungskanälen zwischen Kolben und Trennwandung dienen. Zum gleichen Zweck kann am Kolben und/oder an der Trennwandung eine Profilierung vorgesehen sein.

Der durch die Festverbindung erzielbare Vorteil einer Drehsicherung des Kolbens gegenüber dem Gehäuse durch die Trennwandung stellt sich auch durch eine Axialgleitführung zwischen Kolben und Trennwandung ein, die eine Relativdrehung zwischen Kolben und Trennwandung zwar unterbindet, eine axiale Relativbewegung von Kolben und Trennwandung aber zulässt. Eine derartige Axialgleitführung ist mit Vorzug im radial mittleren Bereich von Kolben und Trennwandung vorgesehen, und verfügt über Zapfen oder Kassetten, die in zugeordnete Öffnungen oder Kassettenhalterungen eingreifen.

Durch die bereits erwähnte Drehsicherung der Trennwandung gegenüber dem Antrieb wird eine drehfeste Verbindung zu demselben herstellt. Auf diese Weise wird für Drehzahlgleichheit zwischen der Trennwandung und dem benachbarten Kupplungselement der Kupplung gesorgt, was sich verschleißmindernd auswirkt. Hierbei besteht auch die Möglichkeit, auf das dem Kolben der Kupplungseinrichtung am nächsten liegende Kupplungselement völlig zu verzichten, wenn die Trennwandung im Bereich ihres radial äußeren Endes mit einem Radialansatz versehen ist, der funktional als Ersatz-Kupplungselement wirksam ist. Bei diesem Ersatz-Kupplungselement kann ebenso wie an einer ohne Radialansatz ausgebildeten Trennwandung die Drehsicherung durch eine Verzahnung, insbesondere im Bereich des radial äußeren Endes der Trennwandung, gebildet sein, wobei diese Verzahnung mit einer weiteren Verzahnung in Eingriff steht, die zur Mitnahme des mit dem Antrieb drehfesten Kupplungselementes der Kupplung dient. Alternativ hierzu kann die Trennwandung aber auch formschlüssig mit einem drehfest am Gehäusedeckel aufgenommenen Kupplungselement in Mitnahmeverbindung stehen.

Eine vorteilhafte Ausführung der Trennwandung entsteht, wenn diese als Axialfeder wirksam ist, und den Kolben federnd in Richtung des Gehäusedeckels drückt, so dass die Herstellung einer unbeabsichtigten, insbesondere einer unkontrollierten Wirkverbindung zwischen Antriebs- und Abtriebsseite der Kopplungsanordnung ausgeschlossen ist. Ein unkontrolliertes Herstellen der Wirkverbindung kann insbesondere nach einem Motorstart bei bereits im wesentlichen befülltem antriebsseitigem Druckraum, aber lediglich teilbefülltem hydrodynamischem Kreis, auftreten, wenn das Fluid fliehkraftbedingt nach radial außen gedrängt wird, und hierbei dem im Druckraum enthaltenen Fluid im wesentlichen nur im hydrodynamischen Kreis enthaltene Luft entgegen wirkt. Bei diesem Betriebszustand kann der hydrodynamische Kreis somit keinen Gegendruck zum Druck im Druckraum aufbauen.

Bei Ausbildung eines Axialspaltes zwischen der als Axialfeder ausgebildeten Trennwandung und dem Kolben der Überbrückungskupplung wirkt die Trennwandung als Anlegefederung für den Kolben, und erlaubt somit eine sanfte Herstellung einer Wirkverbindung zwischen Antriebs- und Abtriebsseite der Kopplungsvorrichtung ohne sprunghaften Momentenanstieg. Die Trennwandung arbeitet bei dieser Ausführung unter Belastung wie eine Tellerfeder, indem sich derjenige Bereich elastisch verformt, der sich zwischen einer axialen Abstützung am Kolben und dem Druckbereich des Kolbens, vorzugsweise gebildet durch eine an demselben vorgesehene Profilierung, erstreckt. Wenn der Axialspalt nach zunehmender elastischer Durchbiegung der Trennwandung aufgebraucht ist, wirkt der Kolben wieder, wie bei der zuvor erläuterten Ausführung, ohne Anlegefederung für den Kolben, mit der Kupplung zusammen.

Mit Vorzug verfügt die Trennwandung über wenigstens eine integrierte Zone, die in zumindest einem vorbestimmten Radialbereich relativ zur Drehachse der Kupplung vorgesehen ist. Diese Zone kann bei einem mit einer Profilierung am Druckbereich versehenen Kolben ebenflächig sein, kann aber ebenso, unter Bildung von Strömungskanälen für radial durchströmendes Fluid, mit einer Profilierung ausgebildet sein. Im letztgenannten Fall kann der Druckbereich des Kolbens ebenflächig sein. Die vorgenannte Profilierung kann entweder als Wellprofilierung oder als unterbrechungsbehaftete Profilierung ausgebildet sein. Im erstgenannten Fall ändert sich in Umfangsrichtung alternierend der Axialabstand der Trennwandung zum Kolben, während im letztgenannten Fall Zungen an der Trennwandung vorgesehen sind, die sich nach radial außen erstrecken, wobei in Umfangsrichtung zwischen jeweils zwei Zungen jeweils eine Umfangsunterbrechung vorgesehen ist.

Die Profilierung kann sowohl an einer axial steifen Tennwandung als auch an einer als Axialfeder ausgebildeten Trennwandung vorgesehen sein.

Die Trennwandung leitet zwischen sich und dem Kolben der Überbrückungskupplung fluidförmiges Medium nach radial außen in den Erstreckungsbereich der Kupplung. Dort sind anspruchsgemäß zwischen Zahnkopfbereichen einer Innenverzahnung an einem Axialabschnitt eines Gehäuses und Zahnfußbereichen einer Außenverzahnung von radial äußeren Kupplungselementen sowie eines zur Axialabstützung dienenden End-Kupplungselementes vorgesehene Strömungspassagen für das fluidförmige Medium vorhanden, um dieses zu den einzelnen Kupplungselementen zu leiten. Um zu vermeiden, dass das fluidförmige Medium unter Umgehung der Kupplungselemente auf direktem Weg von der Trennplatte über die Strömungspassagen in den hydrodynamischen Kreis übertreten kann, ist vorgesehen, einen das bereits erwähnte End-Kupplungselement axial positionierenden Stützring als Fluiddichtung zu verwenden. Mit Vorzug ist dieser Stützring daher axial zwischen den Strömungspassagen und dem hydrodynamischen Kreis angeordnet.

Die vorliegende Erfindung wird nachfolgend mit Bezug auf die beiliegenden Zeichnungen anhand bevorzugter Ausgestaltungsformen detailliert beschrieben. Es zeigen:
- Fig. 1: ein Prinzip-Schaltbild eines Antriebsstranges mit einem Antrieb, einer fluidbefüllten Kopplungsanordnung und einer Getriebeanordnung;
- Fig. 2: eine Längsschnittansicht der Kopplungsanordnung, mit einer einen Kolben, eine Trennwandung und eine Kupplung aufweisenden Kupplungseinrichtung, und mit Ausbildung mit drei Versorgungsleitungen;
- Fig. 3: eine Einzelheit von Kolben und Trennwandung mit Durchnietung als Verbindung und Anordnung auf einer Torsionsdämpfernabe;
- Figl 4: wie Fig. 3, aber mit Anordnung von Kolben und Trennwandung auf einer antriebsseitigen Gehäusenabe, und mit einer der Trennwandung zugeordneten Abdichtung in Form einer Spaltdichtung;
- Fig. 5: wie Fig. 4, aber mit einer Abdichtung in Form einer Berührungsdichtung;
- Fig. 6: eine Draufsicht auf ein Kupplungselement der Kupplung;
- Fig. 7: eine Draufsicht auf die Trennwandung;
- Fig.8: eine Einzelheit mit Drehsicherung der Trennwandung an einem Kupplungselement der Kupplung;
- Fig. 9: eine Kolbendrehsicherung durch Anordnung des Kolbens auf einer Axialgleitführung der Trennwandung;
- Fig. 10: eine Draufsicht auf die Trennwandung zur Darstellung einer anderen Axialgleitführung;
- Fig. 11: eine Ausbildung der Trennwandung als Kupplungselement der Kupplung;
- Fig. 12: eine Zentrierung des Kolbens auf der antriebsseitigen Gehäusenabe und der Trennwandung auf der Torsionsdämpfernabe, sowie eine Anordnung einer Lagerung zwischen der Gehäusenabe und der Torsionsdämpfernabe,
- Fig. 13: wie Fig. 2, aber mit Ausbildung der Kopplungsanordnung mit zwei Versorgungsleitungen,
- Fig. 14: wie Fig. 2, aber mit Ausbildung der Trennwandung als unmittelbar am Kolben anliegende Axialfeder,
- Fig. 15: wie Fig. 14, aber mit einem Axialspalt zwischen Trennwandung und Kolben bei aufgehobener Wirkverbindung zwischen dem Antrieb und einem Abtrieb,
- Fig. 16: eine vergrößerte Herauszeichnung eines Bereichs aus Fig. 15,
- Fig. 17: eine Darstellung der Trennwandung mit einer Wellprofilierung,
- Fig. 18: wie Fig. 17, aber mit einer unterbrechungsbehafteten Profilierung der Trennwandung,
- Fig. 19: eine Darstellung einer in Fig. 2 gezeigten Verzahnung in Blickrichtung auf den Kolben zu, vorgenommen zwischen zwei radial äußeren Kupplungselementen,
- Fig. 20: wie Fig. 19, aber vorgenommen an der von den radial äußeren Kupplungslamellen abgewandten Seite eines ein End-Kupplungselement gegenüber einer Verzahnung im Gehäuse positionierenden Stützringes, und
- Fig. 21: wie Fig. 18, aber mit zusätzlicher Darstellung einer Drehsicherung.

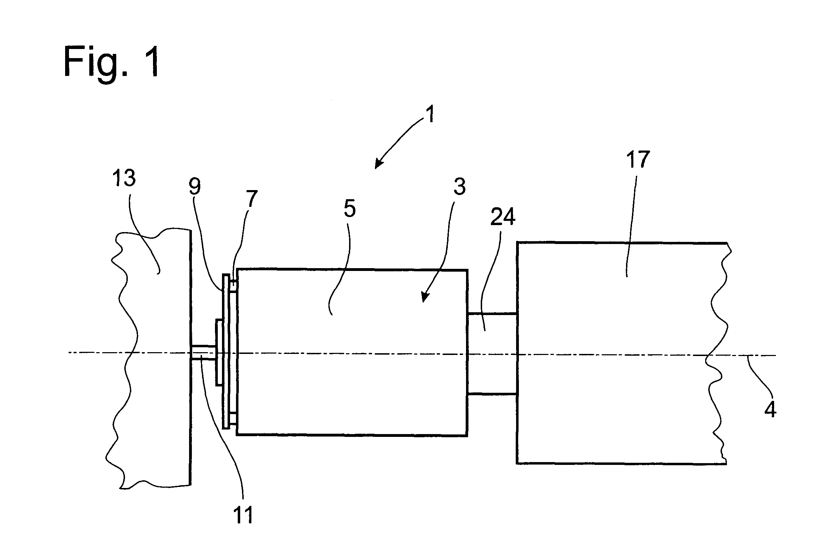

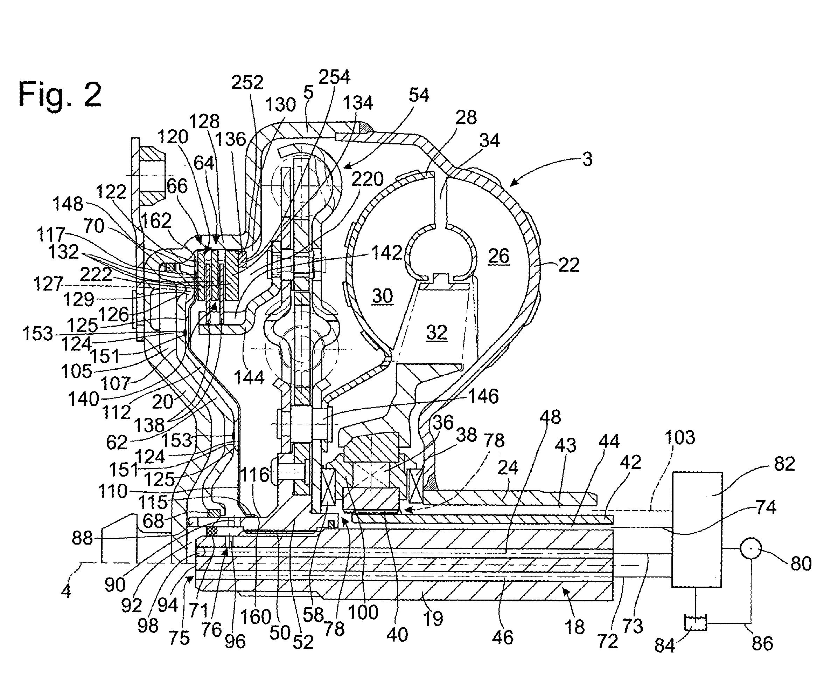

In Fig. 1 ist ein Antriebsstrang 1 mit einer erfindungsgemäßen fluidbefüllten Kopplungsanordnung 3 schematisch dargestellt, wobei die Kopplungsanordnung 3 sowohl durch einen hydrodynamischen Drehmomentwandler gebildet sein kann, als auch durch ein nasslaufendes Kupplungssystem, wie es beispielsweise aus der eingangs bereits genannten DE 102 34 822 A1 bekannt ist. Die Kopplungsanordnung 3, die um eine Drehachse 4 Rotationsbewegungen auszuführen vermag, umfasst ein Gehäuse 5, das über eine Mehrzahl von Befestigungsorganen 7 und ein Kopplungselement 9, wie z.B. eine Flexplatte, mit einem Antrieb 11, beispielsweise der Kurbelwelle einer Brennkraftmaschine 13, zur gemeinsamen Drehung gekoppelt werden kann. An der vom Antrieb 11 entfernt liegenden Axialseite weist das Gehäuse 5 eine abtriebsseitige Gehäusenabe 24 auf, die beispielsweise in eine Getriebeanordnung 17 eingreift und dort eine nicht gezeigte Fluidförderpumpe zur Drehung antreibt. Zur abtriebsseitigen Gehäusenabe 24 konzentrisch angeordnet ist ein in Fig. 2 gezeigter Abtrieb 18, der, beispielsweise als Getriebeeingangswelle 19 ausgebildet, mit seinem freien Ende in das Gehäuse 5 ragt.

In Fig. 2 ist die fluidbefüllte Kopplungsanordnung 3 in Form eines hydrodynamischen Drehmomentwandlers dargestellt. Das Gehäuse 5 weist an seiner dem Antrieb 11 zugewandten Seite einen Gehäusedeckel 20 auf, der fest mit einer Pumpenradschale 22 verbunden ist. Diese geht im radial inneren Bereich in eine Pumpenradnabe 24 über.

Die Pumpenradschale 22 bildet zusammen mit Pumpenradschaufeln ein Pumpenrad 26, das mit einem eine Turbinenradschale 28 mit Turbinenradschaufeln aufweisenden Turbinenrad 30 sowie mit einem über Leitradschaufeln verfügenden Leitrad 32 zusammenwirkt. Pumpenrad 26, Turbinenrad 30 und Leitrad 32 bilden in bekannter Weise einen hydrodynamischen Kreis 34.

Das Leitrad 32 ist auf einem Freilauf 36 angeordnet, der sich über eine für fluidförmiges Medium durchlässige Axiallagerung 38 an der Pumpenradnabe 11 axial abstützt, und steht drehfest, aber axial relativ verschiebbar, über eine Verzahnung 40 mit einer Stützwelle 42 in Verbindung, die, unter Bildung eines Kanals 43 gemeinsam mit der abtriebsseitigen Gehäusenabe 24, radial innerhalb derselben angeordnet ist. Die Stützwelle 42, als Hohlwelle ausgebildet, umschließt ihrerseits, unter Ausbildung eines im wesentlichen ringförmigen Kanals 44, die als Abtrieb 18 dienende Getriebeeingangswelle 19, die über zwei mit Radialversatz zueinander angeordnete Axialdurchgänge 46, 48 für fluidförmiges Medium verfügt, von denen am antriebsseitigen Ende 94 der Getriebeeingangswelle 19 der erste Axialdurchgang 46 in einer Umlenkkammer 92 mündet, während der zweite Axialdurchgang 48 kurz vor Erreichen des antriebsseitigen Endes 94 der Getriebeeingangswelle 19 durch einen Verschluss 98 endet, um sich über eine Radialverbindung 96 nach radial außen zu öffnen.

Die Axialdurchgänge 46, 48 sind, ebenso wie der Kanal 44 und/oder der Kanal 43, jeweils über Strömungsleitungen 72 bis 74 und/oder 103 an einen Fluidverteiler 82 angeschlossen, der zur Aufnahme fluidförmigen Mediums mit einer Versorgungsquelle 80 und zur Abgabe fluidförmigen Mediums mit einem Vorratsbehälter 84 verbunden sein kann. Der letztgenannte kann über eine Verbindungsleitung 86 an die Versorgungsquelle 80 angeschlossen sein kann.

Die Getriebeeingangswelle 19 nimmt über eine Verzahnung 50 eine Torsionsdämpfernabe 52 eines Torsionsschwingungsdämpfers 54 drehfest, aber axial verschiebbar auf. Die Torsionsdämpfernabe 52 stützt sich einerseits über eine Axiallagerung 58 am bereits genannten Freilauf 36 ab, und kann andererseits am Gehäusedeckel 20 in Anlage gelangen. Des weiteren trägt die Torsionsdämpfernabe 52 einen Kolben 62 einer als Überbrückungskupplung 64 ausgebildeten Kupplungseinrichtung 66. Der Kolben 62 ist über eine radial innere Kolbendichtung 68 gegenüber der Torsionsdämpfernabe 52 und über eine radial äußere Kolbendichtung 70 gegenüber dem Gehäusedeckel 20 abgedichtet.

An der radialen Innenseite der Torsionsdämpfernabe 52 ist eine Dichtung 71 vorgesehen, die sich anderenends an der Getriebeeingangswelle 19 abstützt, und zwischen in der Torsionsdämpfernabe 52 vorgesehenen Radialdurchgängen 88, 90 wirksam ist. Der antriebsseitige Radialdurchgang 88 bildet gemeinsam mit der Umlenkkammer 92, dem ersten Axialdurchgang 46 und der ersten Strömungsleitung 72 eine erste Versorgungsleitung 75 für fluidförmiges Medium, der abtriebsseitige Radialdurchgang 90 dagegen zusammen mit der Radialverbindung 96, dem zweiten Axialdurchgang 48 und der zweiten Strömungsleitung 73 eine zweite Versorgungsleitung 76. Schließlich bildet ein Strömungsdurchgang 100 axial zwischen der Axiallagerung 58 und dem Freilauf 36 zusammen mit dem Kanal 44 und der Strömungsleitung 74 und/oder ein Strömungsdurchgang 102 axial zwischen dem Freilauf 36 und der Axiallagerung 38 zusammen mit dem Kanal 43 und der Strömungsleitung 103 eine dritte Versorgungsleitung 78.

Vom Fluidverteiler 82 über die erste Versorgungsleitung 75 eingeleitetes fluidförmiges Medium gelangt in einen zwischen dem Gehäusedeckel 20 und dem Kolben 62 vorgesehenen antriebsseitigen Druckraum 105, der im Fall eines Überdruckes eine Antriebsseite 107 des Kolbens 62 belastet. Vom Fluidverteiler 82 über die zweite Versorgungsleitung 76 eingeleitetes fluidförmiges Medium gelangt dagegen in einen zwischen dem Kolben 62 und einer axial relativ zu demselben bewegbaren Trennwandung 110 vorgesehenen abtriebsseitigen Druckraum 112, der im Fall eines Überdruckes eine Abtriebsseite 114 des Kolbens 62 belastet.

Die Trennwandung 110 kann axial elastisch ausgebildet sein. Sie ist mit ihrem radial inneren Ende 115 über eine Abdichtung 160 an der Torsionsdämpfernabe 52 zentriert, wobei diese Abdichtung 115 als Spaltdichtung 116 ausgeführt ist. Das radial äußere Ende 117 der Trennwandung 110 dient als eine Drehsicherung 162 und dringt axial in einen Bereich zwischen dem Kolben 62 und einem Anfangs-Kupplungselement 122 einer Kupplung 120 ein. Zugunsten eines problemlosen Strömungsdurchganges für das fluidförmige Medium ist die Trennwandung 110 an ihrer dem Kolben 62 zugewandten Seite mit Distanzhaltern 124 versehen, zwischen denen sich in Umfangsrichtung erste Strömungskanäle 125 ausbilden, die in Achsrichtung zwischen dem Kolben 62 und der Trennwandung 110 verlaufen. Alternativ oder zusätzlich kann der Kolben 62 mit einer Profilierung 126 ausgebildet sein, so dass auf diese Weise in den Kolben 62 integrierte Strömungskanäle 127 entstehen. Hierdurch entsteht im Kolben 62 ein Druckbereich 129.

An der Innenseite eines Axialabschnittes 128 des Gehäusedeckels 20 ist eine Verzahnung 130 für radial äußere Kupplungselemente 132, nachfolgend kurz als Außen-Kupplungselemente bezeichnet, vorgesehen, zu der das bereits erwähnte Anfangs-Kupplungselement 122 ebenso wie ein mit größerem Querschnitt ausgebildetes und daher steiferes End-Kupplungselement 134 gehören, wobei das letztgenannte über einen Stützring 136 axial am Gehäusedeckel 20 abgestützt ist. Aufgrund der Verzahnung 130 sind die Außen-Kupplungselemente 132 drehfest an das Gehäuse 5 und damit an den Antrieb 11 angebunden.

Die Außen-Kupplungselemente 132 sind unter Druckeinwirkung durch den Kolben 62 mit radial inneren Kupplungselementen 138, nachfolgend kurz als Innen-Kupplungselemente bezeichnet, in Wirkverbindung versetzbar, wobei zwischen Reibbelägen und Reibflächen der Kupplungselemente 132, 138 ein zur Übertragung von Drehmomenten dienender Reibbereich 140 einer Kupplung 120 entsteht. Die Innen-Kupplungselemente 138 stehen über eine Verzahnung 142 eines Trägers 144 mit einem Eingangsteil 146 des Torsionsschwingungsdämpfers 54 in drehfester Verbindung, durch welchen die Drehmomente über die Verzahnung 50 auf die Getriebeeingangswelle 19 übertragbar sind. Somit sind die Innen-Kupplungselemente 138 über den Torsionsschwingungsdämpfer 54 mit dem Abtrieb 11 verbunden. Bei voneinander getrennten Kupplungselementen 132, 138 werden vom Gehäuse 5 eingeleitete Drehmomente dagegen über den hydrodynamischen Kreis 34 auf das Turbinenrad 30 und von diesem mittels einer Anbindung 146 an den Torsionsschwingungsdämpfer 54 übertragen, von dem aus die Drehmomente wiederum an die Getriebeeingangswelle 19 und damit den Abtrieb 11 weitergeleitet werden. Bei Verzicht auf einen Torsionsschwingungsdämpfer 54 können bei beiden Betriebsarten die Innen-Kupplungselemente 138 unmittelbar an den Abtrieb 11 angebunden sein.

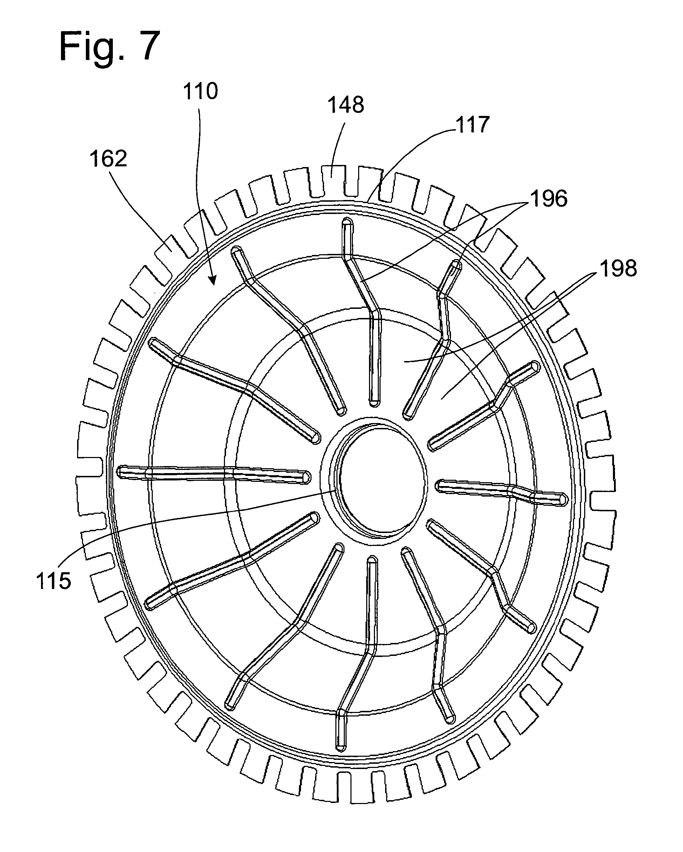

Zur Trennwandung 110 bleibt nachzutragen, dass diese aufgrund des Eingriffs von deren radial äußerem Ende 117 axial zwischen den Kolben 62 und das Anfangs-Kupplungselement 122 bei der Übertragung einer Axialkraft vom Kolben 62 auf den Reibbereich 140 der Kupplung 120 beteiligt ist. Mit Vorzug kann hierbei die Trennwandung 110 axial elastisch ausgebildet sein, insbesondere in Form eines membranartigen Elementes. Zudem kann die Trennwandung 110 über eine Verzahnung 148 an ihrem radial äußeren Ende 117 drehfest an die Verzahnung 130 des Außen-Kupplungselementes 132 angebunden sein. Eine deutliche Darstellung der Verzahnung 148 ist aus Fig. 7 erkennbar.

Zum Schließen der Überbrückungskupplung 64 und damit zum Einrücken wird über die erste Versorgungsleitung 75 der antriebsseitige Druckraum 105 mit einem Überdruck gegenüber dem abtriebsseitigen Druckraum 112 beaufschlagt, und dadurch der Kolben 62 zusammen mit der Trennwandung 110 in Richtung zur Kupplung 120 zur Beaufschlagung der Kupplungselemente 132, 138 mit einer Axialkraft verlagert, so dass die Trennwandung 110 bei diesem Betriebszustand durch den Kolben 62 gegen das Anfangs-Kupplungselement 122 gepresst ist. Gleichzeitig wird der abtriebsseitige Druckraum 112 zur Kühlung des Reibbereiches 140 der Kupplung 120 über die zweite Versorgungsleitung 76 mit fluidförmigem Medium versorgt, wobei das aus der zweiten Versorgungsleitung 76 nachströmende Medium dank der Distanzhalter 124 und/oder der Profilierung 126 über die Strömungskanäle 125, 127 im Druckraum 112 nach radial außen gefördert werden kann, um hier über die Verzahnung 148 der Trennwandung 110 unmittelbar in die Verzahnung 130 der Außen-Kupplungselemente 132 abzuströmen. Die Verzahnung 148 ist demnach als alleiniger Strömungsdurchlass 150 für das fluidförmige Medium zwischen abtriebsseitigem Druckraum 112 und einem Kühlraum 220, in welchem die Kupplung 120 angeordnet ist, wirksam, so dass bei jedem Übertritt fluidförmigen Mediums zwischen diesen beiden Räumen 112, 220 der fluidbefüllten Kopplungsanordnung 3 eine Zwangsdurchströmung der Kupplung 120 herbeigeführt wird. Bei Ausbildung der fluidbefüllten Kopplungsanordnung 3 als hydrodynamischer Drehmomentwandler ist der Kühlraum 220 gleichzeitig als hydrodynamischer Kreis 34 wirksam.

Das fluidförmige Medium wird nach Eintritt in die Verzahnung 130 der Außen-Kupplungselemente 132 innerhalb des Verzahnungsbereiches axial weitergeleitet, maximal allerdings nur bis in den axialen Erstreckungsbereich des End-Kupplungselementes 134 und/oder des Stützringes 136, sofern an zumindest einem dieser Bauteile und/oder im Bereich der Verzahnung 130 entsprechende Dichtungsmaßnahmen getroffen sind. Auf diese Weise verbleibt dem fluidförmigen Medium allein die Möglichkeit, entlang des Reibbereiches 140 der Kupplung 120 zwischen den Kupplungselementen 132 und 138 nach radial innen in den Kühlraum 220 abzuströmen, und dabei den Reibbereich 140 sehr effizient zu kühlen.

Das fluidförmige Medium gelangt vom Kühlraum 220 über den Strömungsdurchgang 100 und/oder 102 und damit über die dritte Versorgungsleitung 78 zum Fluidverteiler 82.

Zum Öffnen der Überbrückungskupplung 64 und damit zum Ausrücken wird die zweite Versorgungsleitung 76 und damit der abtriebsseitige Druckraum 112 mit einem Überdruck gegenüber dem antriebsseitigen Druckraum 105 beaufschlagt, und dadurch der Kolben 62 in Richtung zum Gehäusedeckel 20 zur Aufhebung der auf die Kupplungselemente 132, 138 übertragenen Axialkraft verlagert. Hierbei bewirkt die Versorgung des abtriebsseitigen Druckraumes 112 mit fluidförmigem Medium aus der zweiten Versorgungsleitung 76, dass die Trennwandung 110 axial an dem Anfangs-Kupplungselement 122 in Anlage verbleibt, während der Kolben 62 seine Verlagerungsbewegung in Richtung zum Gehäusedeckel 20 vollzieht. Auch bei diesem Betriebszustand bleibt demnach die Bedingung erhalten, wonach das fluidförmige Medium ausschließlich über die Verzahnung 148 der Trennwandung 110 aus dem abtriebsseitigen Druckraum 112 abströmen kann, um unmittelbar in die Verzahnung 130 der Außen-Kupplungselemente 132 einzudringen, so dass die Verzahnung 148 weiterhin als Strömungsdurchlass 150 für das fluidförmige Medium zwischen abtriebsseitigem Druckraum 112 und hydrodynamischem Kreis 134 wirksam ist.

Auch beim Öffnen der Überbrückungskupplung 64 oder aber bei geöffneter Überbrückungskupplung 64 wird das fluidförmige Medium nach Eintritt in die Verzahnung 130 der Außen-Kupplungselemente 132 zunächst über zumindest einen Teil des Verzahnungsbereiches axial weitergeleitet, um anschließend über den Reibbereich 140 der Kupplung 120 und den Kühlraum 220 über den Strömungsdurchgang 100 und/oder 102 und damit über die dritte Versorgungsleitung 78 zum Fluidverteiler 82 abzuströmen.

Durch die Trennwandung 110 wird also, unabhängig vom jeweiligen Betriebszustand der Überbrückungskupplung 64, jeweils dafür gesorgt, dass der Strömungsdurchlass 150 die jeweils einzige Strömungsverbindung zwischen dem abtriebsseitigen Druckraum 112 und dem Kühlraum 220 darstellt, und dadurch eine Zwangsdurchströmung zwischen diesen beiden Räumen 112, 220 der fluidbefüllten Kopplungsanordnung 3 allein über die Kupplung 120 herbei geführt ist.

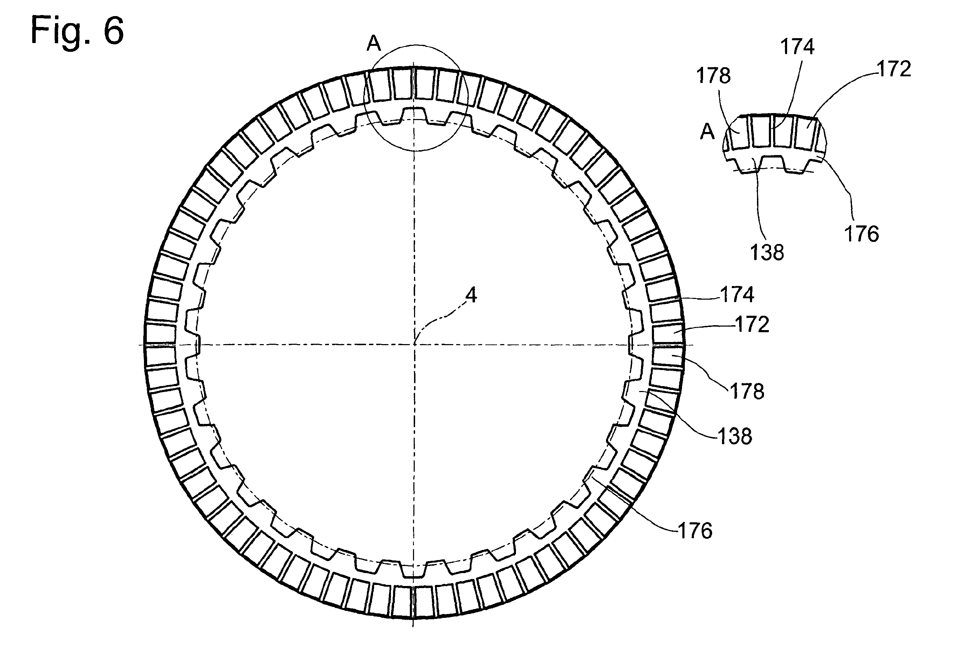

Zur Realisierung eines problemlosen Durchflusses des fluidförmigen Mediums durch den Reibbereich 140 der Kupplung 120 sind innerhalb des Erstreckungsbereiches des Reibbereichs 140, bevorzugt hierbei in Reibbelägen 172, Nutungen 174 vorgesehen. Beispielhaft zeigt Fig. 6 einen derartigen Reibbelag 172, bestehend aus einzelnen Reibbelagsegmenten 178, die, jeweils mit Versatz in Umfangsrichtung zueinander, auf einem Trägerblech 176 einer der Innen-Kupplungselemente 138 aufgebracht sind. Auf diese Weise sind die Nutungen 174 auf der vollen Tiefe der jeweils in Umfangsrichtung angrenzenden Reibbelagsegmente 178 nutzbar. Eine derartige Ausführung unterstützt, in Kombination mit einer hinreichenden Bemessung der Anzahl und Breite der Nutungen 174, einen Strömungsdurchfluss ohne wesentlichen Drosselungseinfluss, was aufgrund des bereits einen Drosselungseinfluss ausübenden Strömungsdurchlasses 150 zwischen dem abtriebsseitigen Druckraum 112 und dem Kühlraum 220 problemlos möglich ist.

Abweichend von der Strömungsführung bei der zuvor beschriebenen Variante kann zum Öffnen der Überbrückungskupplung 64 oder bei offener Überbrückungskupplung 64 die Zuführung fluidförmigen Mediums natürlich auch vom Fluidverteiler 82 über die dritte Versorgungsleitung 78 erfolgen, so dass das Medium nach Durchgang durch den Kühlraum 220 sowie die Kupplung 120 über den Strömungsdurchgang 150 in den abtriebsseitigen Druckraum 112 gelangt, um dort nach radial innen zu strömen, und über die zweite Versorgungsleitung 76 wieder dem Fluidverteiler 82 zugeführt zu werden. Bei Wahl dieser Durchströmungsrichtung liegt allerdings im Kühlraum 220 ein höherer Druck an als im abtriebsseitigen Druckraum 112, was eine Axialverlagerung der Trennwandung 110 in Richtung zum Kolben 62 und dadurch eine Ablösung der Trennwandung 110 vom benachbarten Anfangs-Kupplungselement 122 zur Folge hat, wodurch ein Spalt 222 zwischen der Trennwandung 110 und dem Anfangs-Kupplungselement 122 entstehen kann. Hierdurch kann eine im Kühlraum 220 verbleibende Restleckage entstehen, indem diese in den Spalt 222 einsickert. Dies wirkt sich aufgrund der offenen Überbrückungskupplung 64 allerdings nicht negativ aus, da die zu kühlende Kupplung 120 dann zumindest im wesentlichen ohne Reibungseinfluss ohne Erhitzung bleibt. Außerdem wird trotz des Spaltes 222 der Hauptanteil des den Strömungsdurchlass 150 durchströmenden Fluids in den abtriebsseitigen Druckraum 112 gelangen.

Aufgrund dieser Situation besteht die Möglichkeit, die Trennwandung 110 an der Abtriebsseite 114 des Kolbens 62 mittels einer Festverbindung 151 anzubringen. Dann bleibt die Trennwandung 110 zwar immer immer in konstantem Abstand zum Kolben 62, es bildet sich aber bei Entfernung des Kolbens 62 von der Kupplung 120 der bereits erwähnte Spalt 222 zwischen der Trennwandung 110 und der benachbarten Anfangs-Kupplungselement 122 aus. Bei der Ausführung nach Fig. 2 kann die Festverbindung 151 mittels einer Heftschweißung 153 erfolgen, die zwischen der Abtriebsseite 114 des Kolbens 62 und je einem Distanzhalter 124 der Trennwandung 110 vorgenommen wird.

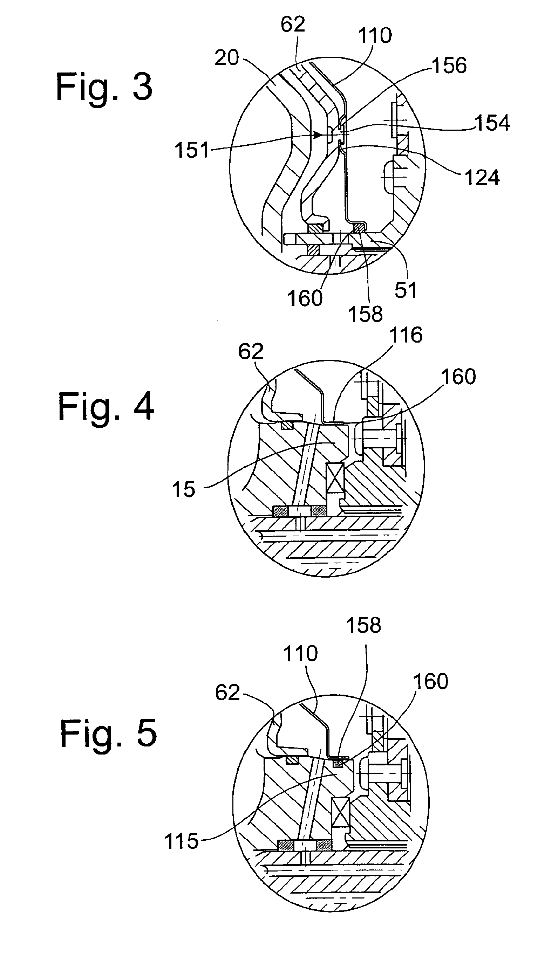

Ebenfalls eine Festverbindung 151 im Bereich je eines Distanzhalters 124, aber mit einer anderen Verbindungsart, zeigt Fig. 3, die lediglich den radial inneren Bereich von Kolben 62, Trennwandung 110 und Torsionsdämpfernabe 52 darstellt. Hiernach verfügt der Kolben 62 über eine Durchnietung 154, welche nach Durchdringung je einer Öffnung 156 in der Trennwandung 110 mittels einer Gegennietbewegung zur Befestigung der Trennwandung 110 am Kolben 62 führt.

Weiterhin zeigt Fig. 3 eine Abdichtung 160 der Trennwandung 110 gegenüber der Torsionsdämpfernabe 52 mittels einer Berührungsdichtung 158, beispielsweise einer Elastomerdichtung. Eine derartige Abdichtung 160 ist auch in Fig. 5 erkennbar, wobei dort allerdings die Trennwandung 110 gemeinsam mit dem Kolben 62 gegenüber der antriebsseitigen Gehäusenabe 15 zentriert ist, und demnach die Abdichtung 160 radial zwischen der Trennwandung 110 und der antriebsseitigen Gehäusenabe 15 angeordnet ist. An der exakt gleichen Stelle kann die Abdichtung 160 aber auch als Spaltdichtung 116 ausgeführt sein, wie Fig. 4 zeigt. Diese Stelle hat den Vorteil, dass Kolben 62 und Trennwandung 110 nicht nur radial außen am Gehäuse 5 aufgenommen sind, sondern auch radial innen. Hierdurch wird wegen des Fehlens einer Differenzdrehzahl sowohl die radial innere Kolbendichtung 68 als auch die der Trennwandung 110 zugeordnete Abdichtung 160 weniger belastet als bei Anordnung auf der Torsionsdämpfernabe 52.

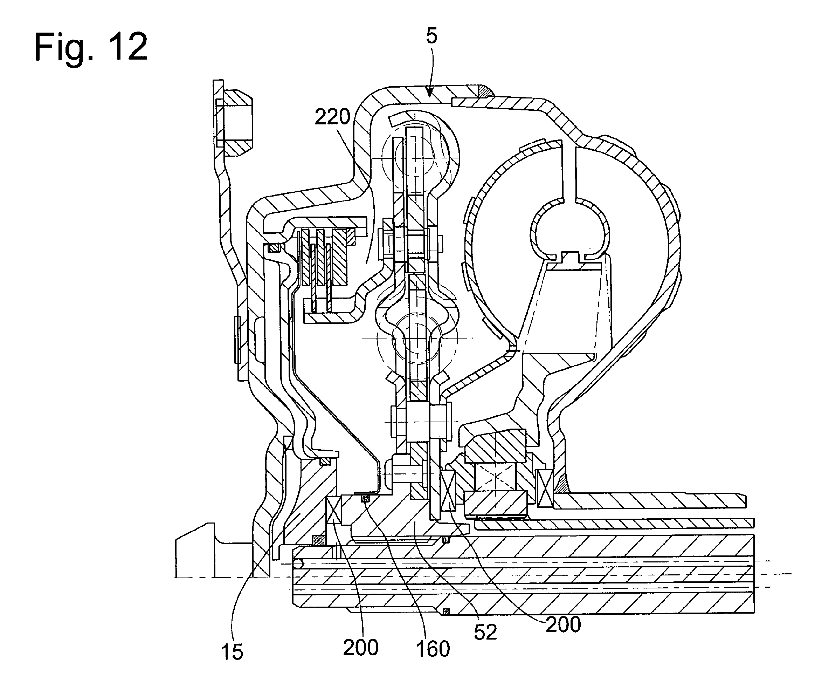

Eine der Fig. 4 oder 5 ähnliche Anordnung zeigt Fig. 12, bei welcher der Kolben 62 unverändert auf der antriebsseitigen Gehäusenabe 15 zentriert ist, die Trennwandung 110 dagegen auf der Torsionsdämpfernabe 52. Um eine eventuelle Höherbelastung der der Trennwandung 110 zugeordneten Abdichtung 160 zu begrenzen, wird zwischen der antriebsseitigen Gehäusenabe 15 und der Torsionsdämpfernabe 52 eine Lagerung 200 vorgesehen, die je nach konstruktiver Ausbildung als Wälz- oder Gleitlager und mit Wirkrichtung in Radial- und/oder Axialrichtung dafür sorgen kann, dass die Getriebeeingangswelle 19 gegenüber dem Gehäuse 5 mit geringeren Versätzen sowie geringerer Unwucht wirksam ist.

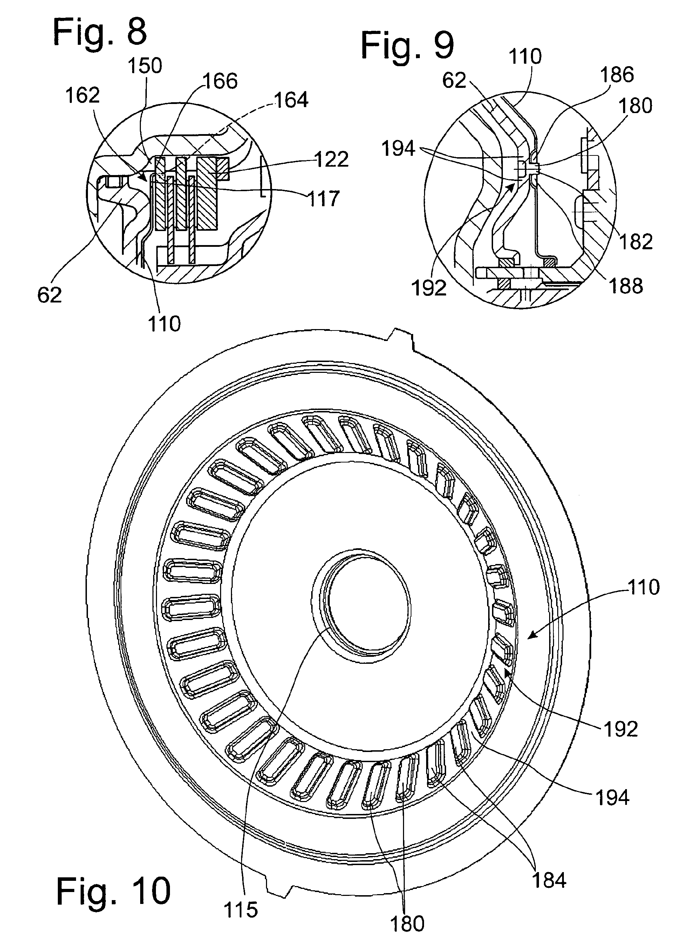

Fig. 8 zeigt eine Drehsicherung 162, die von derjenigen in Fig. 2 abweicht. Hier ist die Trennwandung 110 im Bereich ihres radial äußeren Endes 117 mit Vorsprüngen 166 versehen, die sich, Umfangsversatz zueinander aufweisend, in Richtung zum benachbarten Anfangs-Kupplungselement 122 erstrecken, um dort in entsprechende Aussparungen 164 zumindest im wesentlichen formschlüssig einzudringen, und damit eine Drehverbindung zu diesem Anfangs-Kupplungselement 122 herzustellen. Da das Anfangs-Kupplungselement 122 bei der vorliegenden Ausführung als Außen-Kupplungselement 132 ausgebildet ist, wird auf diese Weise die Trennwandung 110 an das Gehäuse 5 und damit an den Antrieb 11 angebunden. Der Strömungsdurchlass 150 liegt bei dieser Ausführung radial außerhalb des radial äußeren Endes 117 der Trennwandung 110 und wird bezüglich seines Strömungsquerschnittes durch die Verzahnung 130 des Gehäusedeckels 20 begrenzt.

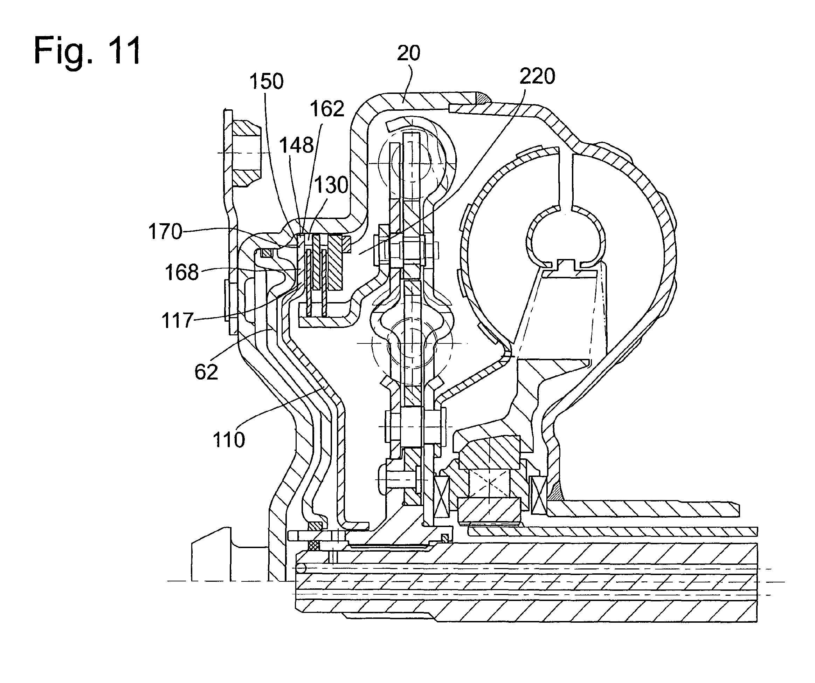

Eine andere diesbezügliche Ausführung ist in Fig. 11 gezeigt, wobei die Trennwandung 110 im Bereich ihres radial äußeren Endes 117 durch einen Radialansatz 168 die Funktion des bisherigen Anfangs-Kupplungselementes 122 übernimmt, und dadurch funktional als Ersatz-Kupplungselement 170 wirksam ist. Der sich hierdurch ergebende Vorteil liegt in der Einsparung des Anfangs-Kupplungselementes 122 als eigenständiges Bauteil. Zur Ausbildung der Drehsicherung 162 ist die Verzahnung 148 in den Radialansatz 168 integriert, und greift in die Verzahnung 130 des Gehäusedeckels 20 ein. Somit ist auch bei dieser Ausführung die Trennwandung 110 drehfest an den Antrieb 11 angebunden. Der Strömungsdurchlass 150 entsteht, wie auch bei der Ausführung nach Fig. 2, im Bereich der Verzahnung 148 in Verbindung mit der Verzahnung 130 des Gehäusedeckels 20.

Fig. 9 zeigt eine Ausführung, bei welcher am Kolben 62 Zapfen 182 mit Versatz in Umfangsrichtung vorgesehen sind, die sich jeweils in Richtung zur Trennwandung 110 erstrecken, und je eine zugeordnete Öffnung 188 derselben durchdringen. Die Zapfen 182 bilden somit eine Axialgleitführung 180, die mit den als Aufnahmen 186 wirksamen Öffnungen 188 eine Kolbendrehsicherung 192 für den Kolben 62 bilden, in Achsrichtung aber eine Relativbewegung zwischem dem Kolben 62 und der Trennwandung 110 zulassen. Die Kolbendrehsicherung 192 ist mit Vorzug in einem radial mittleren Abschnitt 194 von Kolben 62 und Trennwandung 110 angeordnet.

Mit Vorzug im gleichen Radialbereich, aber mit anderer konstruktiver Ausbildung versehen, zeigt Fig. 10 eine weitere Kolbendrehsicherung 192. Bei dieser sind als Axialgleitführungen 180 an der Trennwandung 110 axial vorspringende Kassetten 184 vorgesehen, von denen jede in eine zugeordnete, als Aufnahme dienende, am Kolben 62 vorgesehene, aber zeichnerisch nicht dargestellte Kassettenhalterung eingreift.

Fig. 7 zeigt die Trennwandung 110 in Draufsicht. In dieser Darstellung sind sehr deutlich Radialprofilierungen 196 erkennbar, von denen, in Umfangsrichtung gesehen, jeweils zwei je einen Strömungskanal 198 zwischen sich begrenzen. Hierdurch soll eine unter dem Einfluss der Korioliskraft begünstigte Wirbelbildung zwischen dem Kolben 62 und der Trennwandung 110 zumindest reduziert werden.

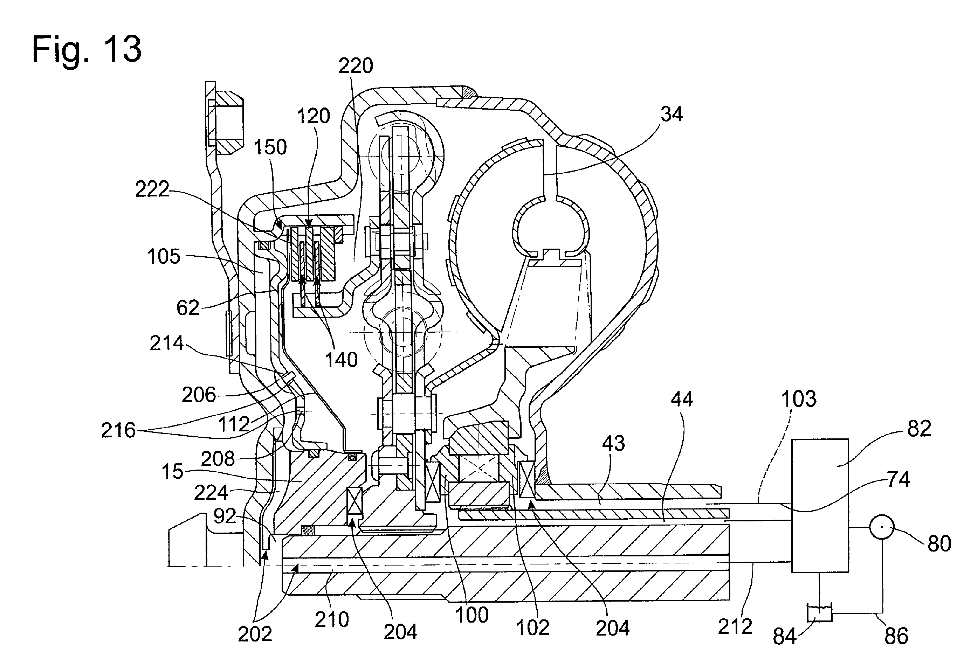

Während bislang ausschließlich Ausführungen der fluidbefüllten Kopplungsanordnung 3 mit drei Versorgungsleitungen 75, 76 un 78 behandelt sind, kurz als Drei-Leitungs-Systeme bezeichnet, ist in Fig. 13 ein Zwei-Leitungs-System dargestellt, das zusätzlich zu einer ersten Versorgungsleitung 202 eine zweite Versorgungsleitung 204 aufweist. Die erste Versorgungsleitung 202 entspricht funktional der zu Fig. 2 mit Bezugsziffer 75 beschriebenen ersten Versorgungsleitung, während die zweite Versorgungsleitung 204 der zu Fig. 2 mit Bezugsziffer 78 beschriebenen dritten Versorgungsleitung funktional entspricht, so dass diesbezüglich keine weitergehende Beschreibung erforderlich erscheint.

Als Unterschied verbleibt lediglich der Strömungsweg zur Versorgung des abtriebsseitigen Druckraumes 112 mit fluidförmigem Medium. Bei geschlossener Überbrückungskupplung 64 stammt das fluidförmige Medium aus dem antriebsseitigen Druckraum 105, und zwar über eine im Kolben 62 vorgesehene erste Verbindung 208, die als Teil einer Drossel 216 wirksam ist, und somit lediglich einen begrenzten Volumenstrom aus dem antriebsseitigen Druckraum 105 in den abtriebsseitigen Druckraum 112 übertreten lässt.

Die Versorgung des antriebsseitigen Druckraumes 105 erfolgt durch Fluidzufuhr vom Fluidverteiler 82 über die der ersten Versorgungsleitung 202 zugeordnete, in die Mittenbohrung 210 der Getriebeeingangswelle 19 mündende Strömungsleitung 212 sowie die ebenfalls der ersten Versorgungsleitung 202 zugeordnete Umlenkkammer 92, um von dieser über Kanäle 224 in der antriebsseitigen Gehäusenabe 15 in den antriebsseitigen Druckraum 105 zu gelangen. Aufgrund des dort bei diesem Betriebszustand vorherrschenden Überdruckes gegenüber dem abtriebsseitigen Druckraum 112 wird das fluidförmige Medium vom antriebsseitigen Druckraum 105 über die Verbindung 208 in den abtriebsseitigen Druckraum 112 gefördert. Ein in den Kolben 62 integriertes Ventil 206, dem eine als weiterer Teil der Drossel 216 dienende zweite Verbindung 214 zwischen den Druckräumen 105 und 112 zugeordnet ist, ist bei diesem Betriebszustand zur Sperrung der zweiten Verbindung 214 verschlossen.

Das derart in den abtriebsseitigen Druckraum 112 gelangte fluidförmige Medium gelangt fliehkraftbedingt innerhalb des Druckraumes 112 nach radial außen, um dort in bereits beschriebener Weise über den Strömungsdurchlass 150 und die Verzahnung 130 des Gehäusedeckels 20 als Zwangsströmung zum Reibbereich 140 der Kupplung 120 zu gelangen, und von dort aus nach Verwendung im Kühlraum 220 über die zweite Versorgungsleitung 204 zum Fluidverteiler 82 zurückgeführt zu werden.

Für eine zumindest teilweise Öffnung der Überbrückungskupplung 64 oder aber eine vollständige Öffnung der Überbrückungskupplung 64 wird die zweite Versorgungsleitung 204 mit einem Überdruck gegenüber dem antriebsseitigen Druckraum 105 beaufschlagt, woraufhin das fluidförmige Medium über die Kupplung 120 und die den Außen-Kupplungselementen 132 zugeordnete Verzahnung 130 in den Erstreckungsbereich der Trennwandung 110 gelangt, um über deren als Strömungsdurchlass 150 für das fluidförmige Medium dienende Verzahnung 148 in den abtriebsseitigen Druckraum 112 abzuströmen. Durch den sich hierdurch im abtriebsseitigen Druckraum 112 gegenüber dem antriebsseitigen Druckraum 105 erhöhenden Druck wird der Kolben 62 in Richtung zum Gehäusedeckel 20 verlagert, und hebt dadurch die auf die Kupplungselemente 132, 138 übertragene Axialkraft zumindest teilweise auf.

Aufgrund des Überdruckes im abtriebsseitigen Druckraum 112 gegenüber dem antriebsseitigen Druckraum 105 wird im abtriebsseitigen Druckraum 112 enthaltenes fluidförmiges Medium über die erste Verbindung 208 in den antriebsseitigen Druckraum 105 gefördert. Gleichzeitig löst der Überdruck im abtriebsseitigen Druckraum 112 eine Öffnung des Ventils 206 aus, so dass auch die demselben zugeordnete zweite Verbindung 214 frei gegeben ist. Fluidförmiges Medium strömt dann verstärkt über die Verbindungen 208 und 214 in den antriebsseitigen Druckraum 105 ab, um von dort aus über die erste Versorgungsleitung 202 zum Fluidverteiler 82 zu gelangen.

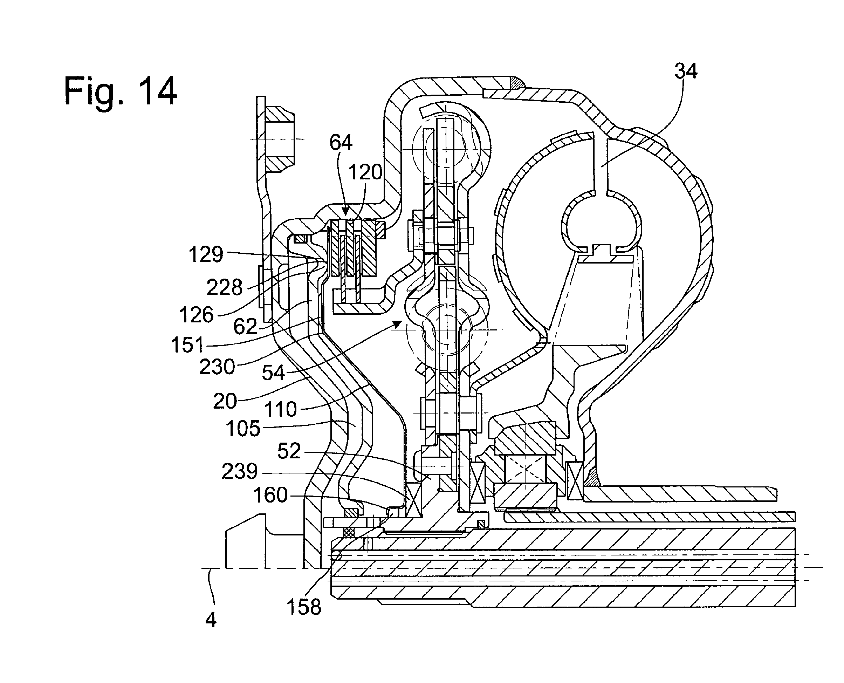

In Fig. 14 ist eine Trennwandung 110 dargestellt, die als Axialfeder 230 ausgebildet ist. Wie bereits zu Fig. 2 erläutert, verfügt die Trennwandung 110 mit Vorzug über eine Festverbindung 151 zum Kolben 62, kann aber auch getrennt von demselben aufgenommen sein. Radial innen ist die Trennwandung 110 über eine Stützlagerung 239 an der Torsionsdämpfernabe 52 axial abgestützt, und über eine Abdichtung 160 gegenüber der Torsionsdämpfernabe 52 radial abgedichtet. Von besonderem Vorteil ist, wenn die Trennwandung 110 eine Axialkraft in Richtung zur Gehäusewandung 20 ausübt, und hierdurch den Kolben 62, solange bewusst kein Überdruck im antriebsseitigen Druckraum 105 gegenüber dem hydrodynamischen Kreis 34 aufgebaut wird, stabil an der Gehäusewandung 20 in Anlage hält. Vorzugsweise wird hierbei die Trennwandung 110 mit Vorspannung in Achsrichtung eingesetzt.

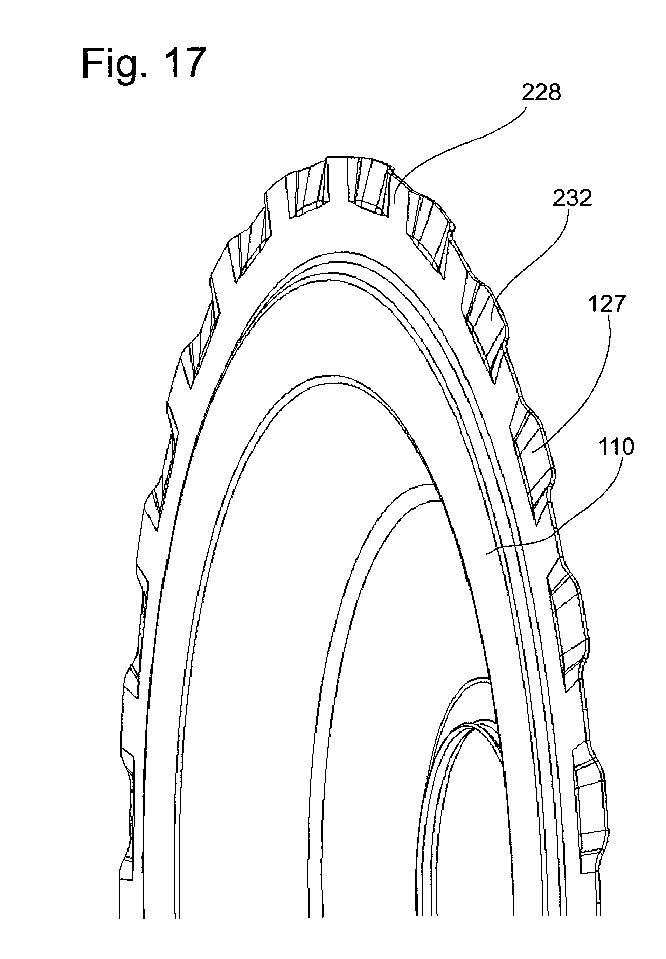

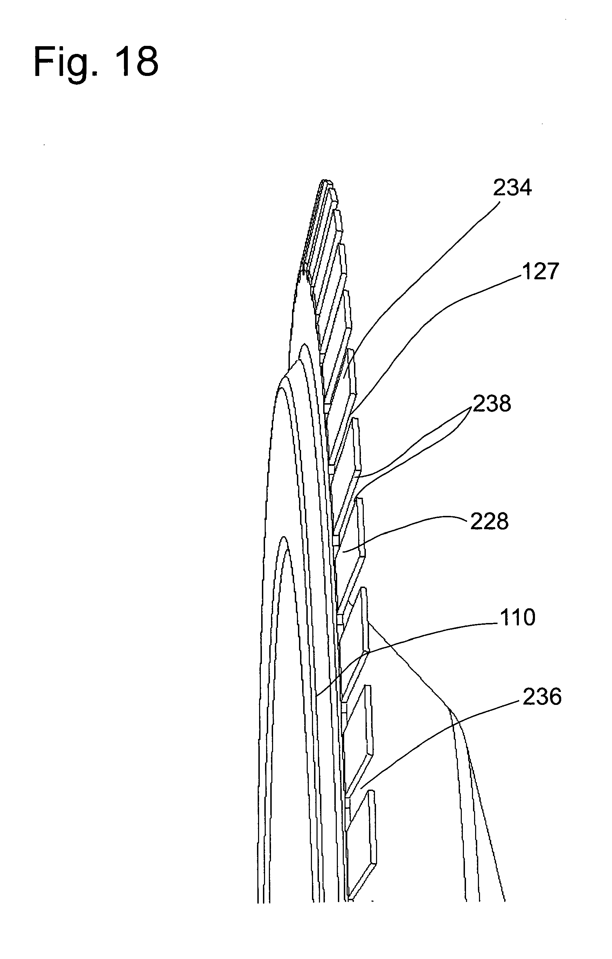

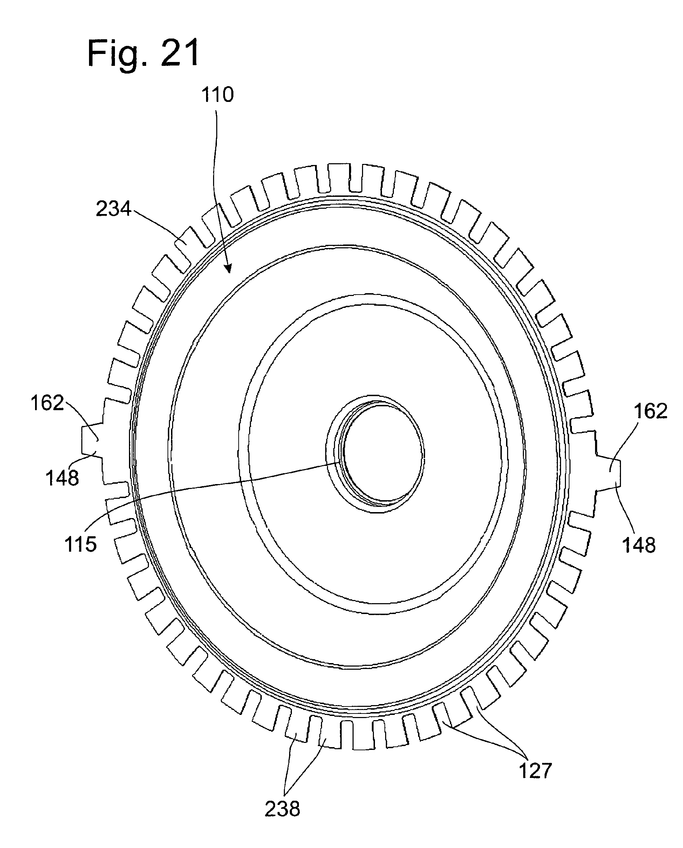

Mit Vorzug verfügt die Trennwandung 110 in einem vorbestimmten Radialabstand zur Drehachse 4 des Gehäuses 5 über eine integrierte Zone 228, die beispielsweise im radialen Erstreckungsbereich der Profilierung 126 am Kolben 62 vorgesehen ist und als Federzone ausgebildet sein kann. Diese integrierte Zone 228 kann entweder, wie in Fig. 14 gezeigt, ebenflächig sein, oder aber gemäß Fig. 17 mit einer Wellprofilierung 232 sowie gemäß Fig. 18 oder 21 mit einer unterbrechungsbehafteten Profilierung 238. Die Fig. 17 oder 18 zeigen jeweils eine Herauszeichung der Trennwandung 110.

Gemäß Fig. 17 ist die integrierte Zone 228 der Trennwandung 110 in Umfangsrichtung mit alternierend sich änderndem Axialabstand zum Kolben 62 ausgebildet, so dass in Umfangsrichtung die bereits erwähnte Wellprofilierung 232 entsteht. Im Gegensatz hierzu zeigt Fig. 18 die integrierte Zone 228 der Trennwandung 110 mit sich nach radial außen erstreckenden Zungen 234, zwischen denen jeweils Umfangsunterbrechungen 236 in der Trennwandung 62 vorgesehen sind, um auf diese Weise in Umfangsrichtung die unterbrechungsbehaftete Profilierung 238 entstehen zu lassen.

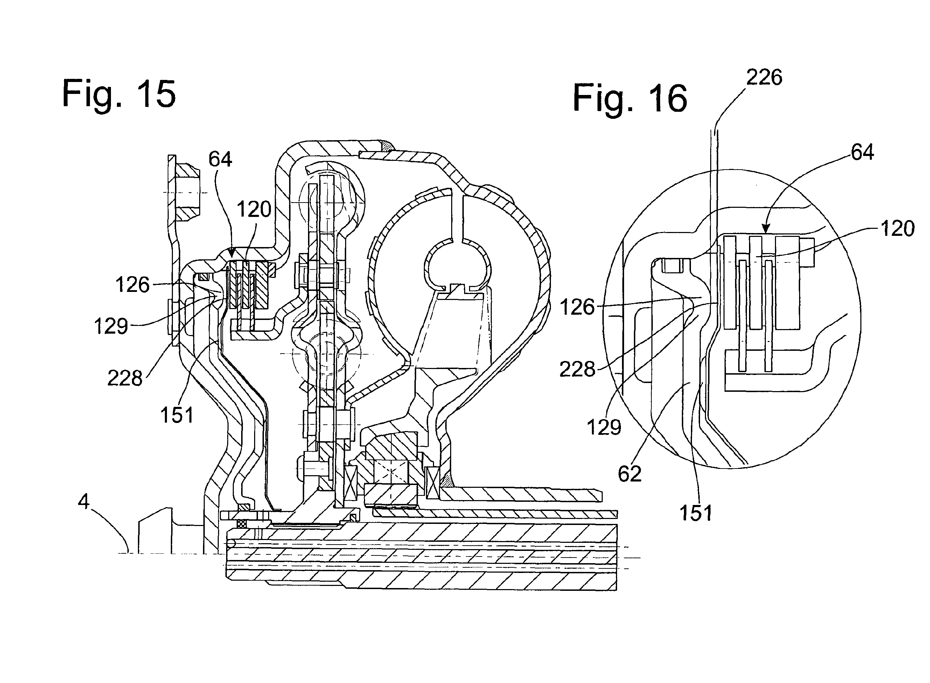

Die Fig. 15 und 16 zeigen ebenfalls eine Trennwandung 110, die als Axialfeder 230 wirksam ist. Abweichend von der Ausgestaltung in Fig. 14 zeigt die Variante in Fig. 15 und 16 allerdings in einer Position des Kolbens 62, bei welcher die Überbrückungskupplung 64 keine Wirkverbindung zwischen der Antriebs- und der Abtriebsseite der Kopplungsanordnung 3 herstellt, einen Axialspalt 226 (Fig. 16) zwischen dem Kolben 62 und der Trennwandung 110. Dieser Axialspalt 226 bewirkt bei einer Annäherung des Kolbens 62 an die Kupplung 120 zunächst eine Anlage der Trennwandung 110 an das axial benachbarte, radial äußere Kupplungselement 132, und bei weiterer Annäherung des Kolbens 62 an die Kupplung 120 zunächst eine elastische Verformung der Trennwandung 110 bei gleichzeitiger Minderung der Breite des Axialspaltes 226, bis der letztgenannte schließlich völlig aufgebraucht ist. Bis zum restlosen Aufbrauch des Axialspaltes 226 wirkt die Trennwandung 110 wie eine Tellerfeder, bei welcher sich der Bereich zwischen der axialen Abstützung der Trennwandung 110 an der Stelle der Festverbindung 151 und dem Druckbereich 129 des Kolbens 62 elastisch verformt. In dieser Phase des Aufbaus einer Wirkverbindung zwischen der Antriebs- und der Abtriebsseite der Kopplungsanordnung 3 wirkt die Trennwandung 110 demnach als Anlegefederung für den Kolben 62. Ist der Axialspalt 226 dagegen restlos aufgebraucht, so entspricht die wirkungsweise der vorliegenden Ausführung der in Fig. 14 gezeigten Ausgestaltung.

Zurückkommend auf die Fig. 17 und 18, können die dort gezeigten Ausführungen der Trennwandung 110, wie bereits behandelt, über eine integrierte Zone 228 verfügen, die sowohl an einer als Axialfeder 230 ausgebildeten Trennwandung 110 als auch an einer Trennwandung 110 mit axial relativ hoher Steifigkeit ausgebildet sein kann.

Unabhängig von der jeweils gewählten axialen Steifigkeit erlauben die Ausführungen der Trennwandung 110 gemäß den Fig. 17, 18 und 21 jeweils eine Art der Strömungsführung, die von derjenigen der Trennwandung 110 bei Fig. 2 abweicht. Fig. 2 zeigt nämlich den Druckbereich 129 des Kolbens 62 mit einer Profilierung 126 zur Bildung der integrierten Strömungskanäle 127, während die Trennwandung 110 zumindest im Erstreckungsbereich des Druckbereiches 129 des Kolbens 62 ebenflächig ist. Im Gegensatz dazu ermöglichen die Ausführungen der Trennwandung 110 gemäß den Fig. 17, 18 und 21 jeweils einen Kolben 62 mit einem ebenflächigen Druckbereich 129, da diese Trennwandungen 110 jeweils mit einer Profilierung 232 oder 238 zur Bildung der Strömungskanäle 127 versehen ist. Im Fall der Fig. 17 entstehen die Strömungskanäle 127 aufgrund der Wellprofilierung 232, im Fall der Fig. 18 oder 21 jeweils durch die in Umfangsrichtung zwischen den Zungen 234 verbleibenden Umfangsunterbrechungen 236. Die Strömungskanäle 127 stehen in Strömungsverbindung mit dem Strömungsdurchlass 150 (Fig. 8), welcher an der an der Innenseite des Axialabschnittes 128 des Gehäusedeckels 20 vorgesehenen Verzahnung 130 vorgesehen ist.

Fig. 21 zeigt anhand der unterbrechungsbehafteten Profilierung 238 die räumliche und funktionale Trennung der Strömungskanäle 127 von der als Drehsicherung 162 dienenden Verzahnung 148 der Trennwandung 110. Diese Verzahnung 148 steht, wie bereits beschrieben, in Drehverbindung mit der Verzahnung 130 an der Innenseite des Axialabschnittes 128 des Gehäusedeckels 20.

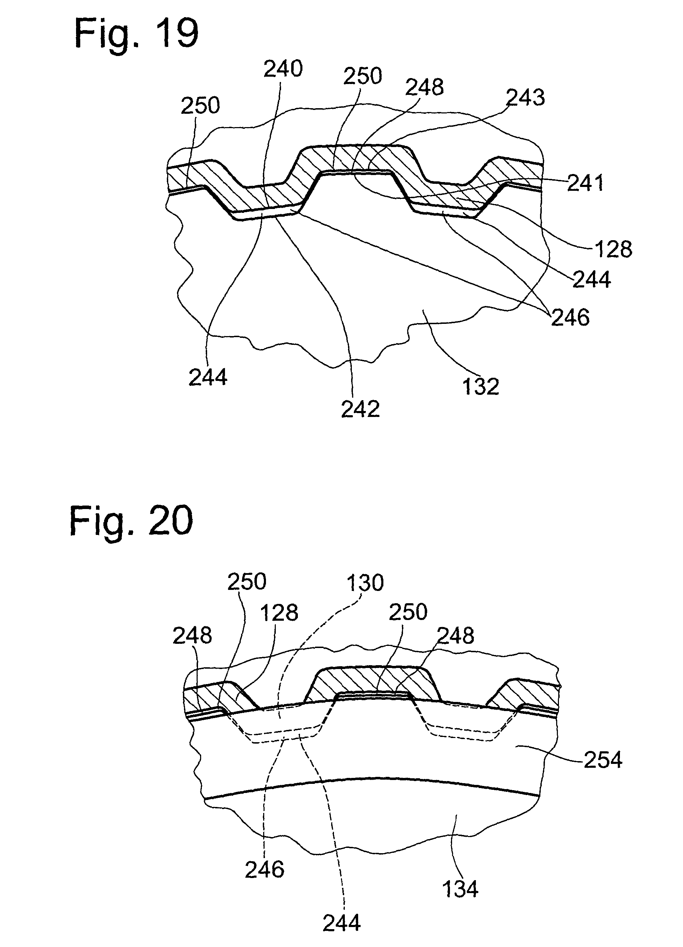

Die Fig. 19 und 20 schließlich zeigen einen Weg für eine Zwangskühlung der Kupplungselemente 132 und 138 der Kupplung 120. Hierzu ist an dem Axialabschnitt 128 des Gehäuses 5 die Verzahnung 130 derart ausgebildet, dass diese zum einen zumindest im Wesentlichen jeweils ohne Spiel in Umfangsrichtung mit den radial äußeren Kupplungselementen 132 sowie mit dem End-Kupplungselement 134 in Drehverbindung steht, und zum anderen mit ihren Zahnkopfbereichen 240 in je einen Zahnfußbereich 242 jeweils eines radial äußeren Kupplungselementes 132 sowie des End-Kupplungselementes 134 eingreift. Hierbei sind die Zahnkopfbereiche 240 der Verzahnung 130 am Axialabschnitt 128 des Gehäuses 5 jeweils bis auf einen Radialspalt 244 an die jeweils zugeordneten Zahnfußbereiche 242 des jeweiligen radial äußeren Kupplungselementes 132 sowie des End-Kupplungselementes 134 herangeführt, wobei diese Radialspalte 244 jeweils als Strömungspassagen 246 für fluidförmiges Medium dienen.

Im Gegensatz dazu stehen die Zahnfußbereiche 243 der am Axialabschnitt 128 des Gehäuses 5 vorgesehenen Verzahnung 130 zumindest im Wesentlichen jeweils ohne Radialspalt mit je einem Zahnkopfbereich 241 jeweils eines radial äußeren Kupplungselementes 132 sowie des End-Kupplungselementes 134 in Eingriff, da die Zahnkopfbereiche 241 zumindest im Wesentlichen bis unmittelbar an die jeweils zugeordneten Zahnfußbereiche 243 der Verzahnung 130 angenähert sind, und dadurch Heranführungen 248 bilden, die jeweils als Strömungshindernisse 250 für fluidförmiges Medium dienen.

Das End-Kupplungselement 134 ist den radial äußeren Kupplungselementen 132 der Kupplung 120 als axialer Anschlag zugeordnet, und mittels eines in eine umlaufende Nut 252 des Axialabschnittes 128 des Gehäuses 5, insbesondere hierbei der Verzahnung 130, eingelassenen Stützringes 136 gegenüber der Verzahnung 130 axial positioniert. Der Stützring 136 ist aufgrund seines Eingriffes in die umlaufende Nut 252 als eine Fluiddichtung 254 wirksam, an welcher das durch die Strömungspassagen 246 ankommende fluidförmige Medium zumindest im Wesentlichen von einem Verlassen des Kühlraumes 220 abgehalten wird. Das fluidförmige Medium wird somit gezwungen, den Kühlraum 220 zu durchströmen und kann diesen lediglich nach Passage der Kupplungselemente 132 und 138 verlassen, um in den hydrodynamischen Kreis 34 überzutreten. Der Stützring 136 unterstützt demnach aufgrund seiner Wirkung als Fluiddichtung 254 die Heranführungen 248, die, wie bereits erwähnt, als Strömungshindernis 250 dienen.

### Bezugszeichenliste

- 1: Antriebsstrang
- 3: Kopplungsanordnung
- 4: Drehachse
- 5: Gehäuse
- 7: Befestigungsorgane
- 9: Kopplungselement
- 11: Antrieb
- 13: Brennkraftmaschine
- 15: antriebsseitige Gehäusenabe
- 17: Getriebeanordnung
- 18: Abtrieb
- 19: Getriebeeingangswelle
- 20: Gehäusedeckel
- 22: Pumpenradschale
- 24: abtriebsseitige Gehäusenabe
- 26: Pumpenrad
- 28: Turbinenradschale
- 30: Turbinenrad
- 32: Leitrad
- 34: hydrodynamische Kreis
- 36: Freilauf
- 38: Axiallagerung
- 40: Verzahnung
- 42: Stützwelle
- 43,44: Kanal
- 46,48: Axialdurchgänge
- 50: Verzahnung
- 52: Torsionsdämpfernabe
- 54: Torsionsschwingungsdämpfer
- 58: Axiallagerung
- 60: Stützlager
- 62: Kolben
- 64: Überbrückungskupplung
- 66: Kupplungseinrichtung
- 68,70: Kolbendichtungen
- 71: Dichtung
- 72,73,74: Strömungsleitungen
- 75,76: Versorgungsleitungen
- 78: Versorgungsleitung
- 80: Versorgungsquelle
- 82: Fluidverteiler
- 84: Vorratsbehälter
- 86: Verbindungsleitung
- 88,90: Radialdurchgänge
- 92: Umlenkkammer
- 94: antriebsseitiges Ende der GEW
- 96: Radialverbindung
- 98: Verschluss
- 100,102: Strömungsdurchgänge
- 103: Strömungsleitung
- 105: antriebsseitiger Druckraum
- 107: Antriebsseite des Kolbens
- 110: Trennwandung
- 112: abtriebsseitiger Druckraum
- 114: Abtriebsseite des Kolbens
- 115: radial inneres Ende der Trennwandung
- 116: Spaltdichtung
- 117: radial äußeres Ende der Trennwandung
- 120: Kupplung
- 122: Anfangs-Kupplungselement
- 124: Distanzhalter
- 125: Strömungskanäle
- 126: Profilierung
- 127: Strömungskanäle
- 128: Axialabschnitt
- 129: Druckbereich
- 130: Verzahnung
- 132: radial äußeres Kupplungselement
- 134: End-Kupplungselement
- 136: Stützring
- 138: radial inneres Kupplungselement
- 140: Reibbereich
- 142: Verzahnung
- 144: Träger
- 146: Anbindung
- 148: Verzahnung
- 150: Strömungsdurchlass
- 151: Festverbindung
- 153: Heftschweißung
- 154: Durchnietung
- 156: Öffnung
- 158: Berührungsdichtung
- 160: Abdichtung
- 162: Drehsicherung
- 164: Aussparung
- 166: Vorsprung
- 168: Radialansatz
- 170: Ersatz-Kupplungselement
- 172: Reibbelag
- 174: Nutungen
- 176: Trägerblech
- 178: Reibbelagsegmente
- 180: Axialgleitführung
- 182: Zapfen
- 184: Kassetten
- 186: Aufnahme
- 188: Öffnung
- 192: Kolbendrehsicherung
- 194: radial mittlerer Abschnitt
- 196: Radialprofilierungen
- 198: Strömungskanal
- 200: Lagerung
- 202: erste Versorgungsleitung
- 204: zweite Versorgungsleitung
- 206: Ventil
- 208: Verbindung
- 210: Mittenbohrung
- 212: Strömungsleitung
- 214: Verbindung
- 216: Drossel
- 220: Kühlraum
- 222: Spalt
- 224: Kanäle
- 226: Axialspalt
- 228: integrierte Zone
- 230: Axialfeder
- 232: Wellprofilierung
- 234: Zungen
- 236: Umfangsunterbrechungen
- 238: unterbrechungsbehaftetes Profil
- 239: Stützlagerung
- 240, 241: Zahnkopfbereiche
- 242, 243: Zahnfußbereiche
- 244: Radialspalt
- 246: Strömungsdurchlass
- 248: Heranführung
- 250: Strömungshindernis
- 252: umlaufende Nut
- 254: Fluiddichtung

## Patentansprüche

1. Fluidbefüllte Kopplungsanordnung mit einer über ein Gehäuse verfügenden Kupplungseinrichtung, aufweisend einen im Gehäuse zumindest im wesentlichen abgedichtet und axial verlagerbar angeordneten Kolben und eine in einem Kühlraum vorgesehene, einen Reibbereich aufweisende Kupplung, wobei durch die Kupplungseinrichtung in Abhängigkeit von der Position des Kolbens in Bezug zur Kupplung eine Wirkverbindung zwischen einem Antrieb und einem Abtrieb zumindest teilweise herstellbar oder aufhebbar ist, wobei durch den Kolben ein zwischen einer Antriebsseite des Kolbens und einer benachbarten Gehäusewandung vorgesehener antriebsseitiger Druckraum von einem an eine Abtriebsseite des Kolbens vorgesehenen abtriebsseitigen Druckraum zumindest im wesentlichen getrennt und zumindest einem dieser Druckräume sowie dem Kühlraum wenigstens eine Versorgungsleitung zugeordnet ist, die an wenigstens einer Versorgungsquelle angeschlossen ist,
**dadurch gekennzeichnet,**
**dass** der abtriebsseitige Druckraum (112) zumindest im wesentlichen einerseits durch die Abtriebsseite (114) des Kolbens (62) und andererseits durch eine dem Kolben (62) zugeordnete Trennwandung (110) begrenzt ist, die ihrerseits zwischen dem abtriebsseitigen Druckraum (112) und dem Kühlraum (220) wirksam ist.

2. Fluidbefüllte Kopplungsanordnung nach Anspruch 1,
**dadurch gekennzeichnet,**
**dass** die Trennwandung (110) unabhängig von der jeweiligen axialen Position des Kolbens (62) und damit vom Betriebszustand der Kupplungseinrichtung (66) stets in Anlage an dem jeweils benachbarten Bauteil (122) der Kupplung (120) gehalten ist.

3. Fluidbefüllte Kopplungsanordnung nach Anspruch 1 oder 2,
**dadurch gekennzeichnet,**
**dass** die Inanlagehaltung der Trennwandung (110) am jeweils benachbarten Bauteil (122) der Kupplung (120) unter dem Einfluss eines Druckgefälles zwischen dem Druckraum (112) und dem Kühlraum (220) bestimmt ist.

4. Fluidbefüllte Kopplungsanordnung nach einem der Ansprüche 1 bis 3,
**dadurch gekennzeichnet,**
**dass** die Trennwandung (110) gegenüber dem Kolben (62) axial verlagerbar angeordnet ist.

5. Fluidbefüllte Kopplungsanordnung nach Anspruch 1,
**dadurch gekennzeichnet,**
**dass** die Trennwandung (110) mittels einer Festverbindung (151) axial bewegungsgesichert an dem Kolben (62) aufgenommen ist.

6. Fluidbefüllte Kopplungsanordnung nach einem der Ansprüche 1 bis 5,
**dadurch gekennzeichnet,**
**dass** die Trennwandung (110) und/oder der Kolben (62) an ihren dem jeweils anderen Bauteil (62, 110) zugewandten Seiten mit Distanzhaltern (124) zur Schaffung von Strömungskanälen (125) zwischen Trennwandung (110) und Kolben (62) ausgebildet sind.

7. Fluidbefüllte Kopplungsanordnung nach Anspruch 1, 5 und 6,
**dadurch gekennzeichnet,**
**dass** die Festverbindung (151) jeweils im Erstreckungsbereich je eines Distanzhalters (124) vorgesehen ist.

8. Fluidbefüllte Kopplungsanordnung nach einem der Ansprüche 1 bis 7,
**dadurch gekennzeichnet,**
**dass** der Kolben (62) und/oder die Trennwandung (110) über eine axiale Profilierung (126) zur Schaffung von Strömungskanälen (127) zwischen Trennwandung (110) und Kolben (62) verfügt.

9. Fluidbefüllte Kopplungsanordnung nach einem der Ansprüche 1 bis 8,
**dadurch gekennzeichnet,**
**dass** zwischen dem abtriebsseitigen Druckraum (112) und dem Kühlraum (220) ein Strömungsdurchlass (150) vorgesehen ist, der durch Positionierung im Anordnungsbereich der Kupplung (120) eine Zwangsbeströmung des Reibbereiches (140) derselben bewirkt.

10. Fluidbefüllte Kopplungsanordnung nach einem der Ansprüche 1 bis 9,
**dadurch gekennzeichnet,**
**dass** die Trennwandung (110) zumindest im wesentlichen in ihrem radial äußeren Bereich über den Strömungsdurchlass (150) zwischen dem abtriebsseitigen Druckraum (112) und dem Kühlraum (220) verfügt.

11. Fluidbefüllte Kopplungsanordnung nach einem der Ansprüche 1 bis 10,
**dadurch gekennzeichnet,**
**dass** die Trennwandung (110) zumindest im wesentlichen im Bereich ihres radial äußeren Endes (117) über eine Drehsicherung (162) gegenüber dem Gehäuse (5) und damit dem Antrieb (11) verfügt.

12. Fluidbefüllte Kopplungsanordnung nach einem der Ansprüche 1 bis 11,
**dadurch gekennzeichnet,**
**dass** die Drehsicherung (162) als Strömungsdurchlass (150) wirksam ist.

13. Fluidbefüllte Kopplungsanordnung nach Anspruch 11 oder 12 mit einer Verzahnung am Gehäusedeckel zur Drehsicherung antriebsseitiger Kupplungselemente der Kupplung,
**dadurch gekennzeichnet,**
**dass** die Drehsicherung (162) durch eine in die Verzahnung (130) des Gehäusedeckels (20) eingreifende Verzahnung (142) der Trennwandung (110) gebildet ist.

14. Fluidbefüllte Kopplungsanordnung nach Anspruch 11 oder 12,
**dadurch gekennzeichnet,**
**dass** die Drehsicherung (162) durch zumindest einen an der Trennwandung (110) vorgesehenen, in eine Aussparung (164) des benachbarten Kupplungselementes (122) formschlüssig eingreifenden Vorsprung (166) gebildet ist.

15. Fluidbefüllte Kopplungsanordnung nach Anspruch 11 oder 12,
**dadurch gekennzeichnet,**
**dass** die Trennwandung (110) über einen äußeren Radialansatz (168) verfügt, der, bei Wirksamkeit als Ersatz-Kupplungselement (170) für die vom Kolben beaufschlagbare Kupplung (120), am radial äußeren Ende (117) des Radialansatzes (168) eine Verzahnung (142) aufweist, die zum Eingriff in die Verzahnung (130) des Gehäusedeckels (20) bestimmt ist.

16. Fluidbefüllte Kopplungsanordnung nach einem der Ansprüche 1 bis 15,
**dadurch gekennzeichnet,**
**dass** durch eine am Kolben (62) und/oder an der Trennwandung (110) vorgesehene Axialgleitführung (180) eine Kolbendrehsicherung (192) für den Kolben (62) gebildet ist, die in eine zugeordnete Aufnahme (186) des jeweils benachbarten Bauteils, also Kolben (62) oder Trennwandung (110), eingreift, und eine Relativbewegung von Kolben (62) und Trennwandung (110) in Axialrichtung zulässt.

17. Fluidbefüllte Kopplungsanordnung nach Anspruch 16,
**dadurch gekennzeichnet,**
**dass** die Axialgleitführung (180) durch zumindest einen Zapfen (182) gebildet ist, der in je eine als Aufnahme (186) dienende Öffnung (188) axial verschiebbar eingreift.

18. Fluidbefüllte Kopplungsanordnung nach Anspruch 16,
**dadurch gekennzeichnet,**
**dass** die Axialgleitführung (180) durch zumindest eine Kassette (184) gebildet ist, die in je eine als Aufnahme (186) dienende Kassettenhalterung axial verschiebbar eingreift.

19. Fluidbefüllte Kopplungsanordnung nach Anspruch 16, 17 oder 18,
**dadurch gekennzeichnet,**
**dass** die Axialgleitführung (180) in Verbindung mit der Aufnahme (186) jeweils in einem radial mittleren Abschnitt (194) der Trennwandung (110) sowie des Kolbens (62) vorgesehen ist.

20. Fluidbefüllte Kopplungsanordnung nach einem der Ansprüche 1 bis 19 mit einem antriebsseitigen Druckraum, an welchen eine demselben unmittelbar zugeordnete erste Versorgungsleitung angeschlossen ist,
**dadurch gekennzeichnet,**
**dass** der abtriebsseitige Druckraum (112) entweder über eine demselben unmittelbar zugeordnete zweite Versorgungsleitung (76) oder über eine erste Verbindung (208) zur ersten Versorgungsleitung (75; 202) an die Versorgungsquelle (80) angeschlossen ist.

21. Fluidbefüllte Kopplungsanordnung nach Anspruch 20,
**dadurch gekennzeichnet,**
**dass** der abtriebsseitige Druckraum (112) durch die erste Verbindung (208) sowie durch eine in Abhängigkeit vom Schaltzustand eines Ventils (206) geöffnete zweite Verbindung (214) mit dem antriebsseitigen Druckraum (105) verbunden und damit an die erste Versorgungsleitung (75; 202) angeschlossen ist.

22. Fluidbefüllte Kopplungsanordnung nach Anspruch 21,
**dadurch gekennzeichnet,**
**dass** das Ventil (206) bei einem Überdruck im antriebsseitigen Druckraum (105) gegenüber dem abtriebsseitigen Druckraum (112) die zweite Verbindung (214) verschließt, bei umgekehrtem Druckverhältnis dagegen offen hält.

23. Fluidbefüllte Kopplungsanordnung nach einem der Ansprüche 1 bis 22 mit einem eine Torsionsdämpfernabe aufweisenden Torsionsschwingungsdämpfer,
**dadurch gekennzeichnet,**
**dass** der Kolben (62) ebenso wie die Trennwandung (110) auf der Torsionsdämpfernabe (52) aufgenommen ist.

24. Fluidbefüllte Kopplungsanordnung nach einem der Ansprüche 1 bis 22 mit einer am Gehäusedeckel aufgenommenen antriebsseitigen Gehäusenabe,
**dadurch gekennzeichnet,**
**dass** der Kolben (62) an der antriebsseitigen Gehäusenabe (15) und die Trennwandung (110) an der Torsionsdämpfernabe (52) aufgenommen ist, wobei zwischen antriebsseitiger Gehäusenabe (15) und Torsionsdämpfernabe (52) zumindest eine zentrierende und/oder axial positionierende Lagerung (200) vorgesehen ist.

25. Fluidbefüllte Kopplungsanordnung nach einem der Ansprüche 1 bis 24,
**dadurch gekennzeichnet,**
**dass** die Trennwandung (110) zumindest an ihrem radial inneren Ende (115) gegenüber der antriebsseitigen Gehäusenabe (15) oder der Torsionsdämpfernabe (52) mit einer Abdichtung (160) versehen ist.

26. Fluidbefüllte Kopplungsanordnung nach Anspruch 25,
**dadurch gekennzeichnet,**
**dass** die Abdichtung (160) als Spaltdichtung (116) ausgebildet ist.

27. Fluidbefüllte Kopplungsanordnung nach Anspruch 25,
**dadurch gekennzeichnet,**
**dass** die Abdichtung (160) als Berührungsdichtung (158) ausgebildet ist.

28. Fluidbefüllte Kopplungsanordnung nach einem der Ansprüche 1 bis 27,
**dadurch gekennzeichnet,**
**dass** die Trennwandung (110) über Radialprofilierungen (196) zur beidseitigen Begrenzung von in Umfangsrichtung jeweils zwischen zwei Radialprofilierungen (196) verlaufenden Strömungskanälen (198) verfügt.

29. Fluidbefüllte Kopplungsanordnung nach einem der Ansprüche 1 bis 28,
**dadurch gekennzeichnet,**
**dass** die Trennwandung (110) axial elastisch ausgebildet ist.

30. Fluidbefüllte Kopplungsanordnung nach Anspruch 29,
**dadurch gekennzeichnet,**
**dass** die Trennwandung (110) als Axialfeder (230) ausgebildet ist, die auf den Kolben (62) der Überbrückungskupplung (64) eine Axialkraft ausübt.

31. Fluidbefüllte Kopplungsanordnung nach Anspruch 29 oder 30,
**dadurch gekennzeichnet,**
**dass** die Trennwandung (110) bei Ausführung als Axialfeder (230) eine zum Gehäusedeckel (20) gerichtete Axialkraft erzeugt.

32. Fluidbefüllte Kopplungsanordnung nach einem der Ansprüche 29 bis 31,
**dadurch gekennzeichnet,**
**dass** die Trennwandung (110) bei Ausführung als Axialfeder (230) unter axialer Vorspannung steht.

33. Fluidbefüllte Kopplungsanordnung nach einem der Ansprüche 29 bis 31,
**dadurch gekennzeichnet,**
**dass** die Trennwandung (110) bei Ausführung als Axialfeder (230) zumindest bei aufgehobener Wirkverbindung zwischen dem Antrieb (11) und dem Abtrieb (18) unter Einhaltung eines vorbestimmten Axialspaltes (226) gegenüber dem Kolben (62) angeordnet ist, während die Trennwandung (110) im Verlauf der Herstellung der Wirkverbindung zwischen dem Antrieb (11) und dem Abtrieb (18) unter elastischer Verformung gegen die Wirkung einer Federkraft eine zunehmende Annäherung an den Kolben (62) bis zur Inanlagebringung an demselben erfährt.

34. Fluidbefüllte Kopplungsanordnung nach einem der Ansprüche 1 bis 33,
**dadurch gekennzeichnet,**
**dass** die Trennwandung (110) über wenigstens eine integrierte Zone (228) verfügt.

35. Fluidbefüllte Kopplungsanordnung nach Anspruch 34,
**dadurch gekennzeichnet,**
**dass** die wenigstens eine integrierte Zone (228) der Trennwandung (110) in zumindest einem vorbestimmten Radialbereich relativ zur Drehachse (4) des Gehäuses (5) ausgebildet ist

36. Fluidbefüllte Kopplungsanordnung nach Anspruch 34 oder 35,
**dadurch gekennzeichnet,**
**dass** die integrierte Zone (228) der Trennwandung (110) zumindest im Wesentlichen im Radialbereich des Druckbereichs (129) des Kolbens (62) vorgesehen ist.

37. Fluidbefüllte Kopplungsanordnung nach Anspruch 34, 35 oder 36,
**dadurch gekennzeichnet,**
**dass** die integrierte Zone (228) der Trennwandung (110) bei mit einer Profilierung (126) zur Bildung von Strömungskanälen (127) versehenen Druckbereich (129) des Kolbens (62) ebenflächig ausgebildet sein kann.

38. Fluidbefüllte Kopplungsanordnung nach Anspruch 34, 35 oder 36,
**dadurch gekennzeichnet,**
**dass** die integrierte Zone (228) der Trennwandung (110) in Umfangsrichtung mit alternierend sich änderndem Axialabstand zum Druckbereich (129) des Kolbens (62) ausgebildet ist, so dass in Umfangsrichtung eine Wellprofilierung (232) entsteht.

39. Fluidbefüllte Kopplungsanordnung nach Anspruch 34, 35 oder 36,
**dadurch gekennzeichnet,**
**dass** die integrierte Zone (228) der Trennwandung (110) mit sich nach radial außen erstreckenden Zungen (234) ausgebildet ist, zwischen denen jeweils Umfangsunterbrechungen (236) in der Trennwandung (62) vorgesehen sind, so dass in Umfangsrichtung eine unterbrechungsbehaftete Profilierung (238) entsteht.

40. Fluidbefüllte Kopplungsanordnung nach Anspruch 38 oder 39,
**dadurch gekennzeichnet,**
**dass** die integrierte Zone (228) bei Ausbildung der Trennwandung (110) mit einer Profilierung (232, 238) zur Bildung von Strömungskanälen (127) dient, so dass der Druckbereich (129) des Kolbens (62) ebenflächig ausgebildet sein kann.

41. Fluidbefüllte Kopplungsanordnung nach einem der Ansprüche 34 bis 40,
**dadurch gekennzeichnet,**
**dass** die Trennwandung (110) bei Ausbildung mit einer integrierten Zone (228) sowohl in ebenflächiger Ausführung als auch in Form einer Profilierung (232, 238) als Axialfeder (230) vorgesehen sein kann.

42. Fluidbefüllte Kopplungsanordnung nach einem der Ansprüche 1 bis 41 mit einer am Axialabschnitt (128) des Gehäuses (5) vorgesehenen Verzahnung (130), in welche jeweils ein radial äußeres Kupplungselement (132) zumindest im Wesentlichen jeweils ohne Spiel in Umfangsrichtung eingreift, wobei die Verzahnung (130) jeweils mit ihren Zahnkopfbereichen (240) in je einen Zahnfußbereich (242) jeweils eines radial äußeren Kupplungselementes (132) ragt, das seinerseits mit seinen Zahnkopfbereichen (241) in je einen Zahnfußbereich (243) der Verzahnung (130) ragt,
**dadurch gekennzeichnet,**
**dass** die Zahnkopfbereiche (240) am Axialabschnitt (128) des Gehäuses (5) jeweils bis auf einen Radialspalt (244) an die jeweils zugeordneten Zahnfußbereiche (242) des jeweiligen radial äußeren Kupplungselementes (132) herangeführt sind, wobei diese Radialspalte (244) jeweils als Strömungspassagen (246) für fluidförmiges Medium dienen.

43. Fluidbefüllte Kopplungsanordnung nach dem Oberbegriff des Anspruches 42 oder nach einem der Ansprüche 1 bis 42 ,
**dadurch gekennzeichnet,**
**dass** die Zahnkopfbereiche (241) des jeweiligen radial äußeren Kupplungselementes (132) zumindest im Wesentlichen bis unmittelbar an die jeweils zugeordneten Zahnfußbereiche (243) des Axialabschnittes (128) des Gehäuses (5) angenähert sind, und hierdurch Heranführungen (248) bilden, die jeweils als Strömungshindernisse (250) für fluidförmiges Medium dienen.

44. Fluidbefüllte Kopplungsanordnung nach Anspruch 42 und/oder 43, mit einem den radial äußeren Kupplungselementen (132) als Anschlag zugeordneten End-Kupplungselement (134), das mittels eines in eine umlaufende Nut (252) des Axialabschnittes (128) des Gehäuses (5) eingelassenen Stützringes (136) seinerseits gegenüber der Verzahnung (130) axial positioniert ist,
**dadurch gekennzeichnet,**
**dass** der Stützring (136) aufgrund seines Eingriffes in die umlaufende Nut (252) zumindest im Erstreckungsbereich der Strömungspassagen (246) der Verzahnung (130) als Fluiddichtung (254) wirksam ist.
